# EUROPEAN PATENT APPLICATION

(11) **EP 4 772 314 A1**
(43) Date of publication of application: **08.07.2026**
(21) Application number: 24859792.4
(22) Date of filing: 27.08.2024
(51) Int. Cl.: B25J 11/00

(54) **WORK MANIPULATOR AND SYSTEM PROVIDED WITH WORK MANIPULATOR**

(30) Priority: 28.08.2023 WO PCT/JP2023/031057
(71) Applicant: F. MED Co., Ltd., Fukuoka-shi, Fukuoka 810-0801 (JP)
(72) Inventor: OGURI, Susumu, Fukuoka-shi, Fukuoka 810-0801 (JP)
(74) Representative: Plougmann Vingtoft a/s
(86) International application number: PCT/JP2024/030557
(87) International publication number: WO 2025/047760

(57) **Abstract**

Provided is a work manipulator capable of improving, by using a parallel link mechanism, the stability of the position and orientation of an end effector.

A work manipulator 10 includes: a distal link 13 for supporting an end effector 12; and a parallel link mechanism 10A having six linkages for moving the distal link 13. The distal link 13 has six distal links 14 connected to the six linkages. The six distal links 14 are arranged about a central axis of the distal link 13. Six angles, each between adjacent distal links 14 as viewed from the central axis, are alternately set to a prescribed large angle α and prescribed small angle β about the central axis.

## Description

### [Technical Field]

The present invention relates to a work manipulator applicable to an automated work machine such as a surgical robot and an industrial robot, and to a system including the work manipulator.

### [Background Art]

In surgeries relative to orthopedic surgery, plastic surgery, reconstructive surgery for defects, and the like, so-called microsurgeries are performed under a microscope for anastomosis of minute surgical targets such as thin blood vessels, nerves, and lymphatic vessels about 0.5 to 2 mm in diameter. Because the surgical targets are small, extremely precise and accurate work is required, and the surgeries require a high level of skill. In addition, due to the level of difficulty, such surgeries tend to take a long time, and such lengthy surgeries place a heavy burden on the surgeon. As such, the number of surgeons who can perform microsurgeries has been limited compared to the need for such surgeries, and such surgeries have therefore been unable to be performed frequently enough.

Considering the utilization of manipulators (robots), which have undergone significant technological advancements in recent years, master-slave manipulators can not only replicate human movements without any modification, but also enable scaled-down versions of such movements. If a manipulator that operates with precision is able to take over surgical movements, it would be possible to ensure precision by eliminating the effects of hand tremors and the like, reducing the burden on the surgeon and improving the efficiency of the surgery.

Accordingly, the inventors of the present invention have proposed a fine work support system capable of efficiently assisting work by appropriately performing motions involved in work through remote control, and reducing the burden on a worker, as well as a fine work manipulator for use in such a system (see PTL 1).

### [Citation List]

### [Patent Literature]

[PTL 1]
Japanese Patent Application Publication No. 2017-87322

### [Summary of Invention]

### [Technical Problem]

The fine work manipulator disclosed in PTL 1 uses a parallel link mechanism to move an end effector at a distal end thereof. Here, there may be a case where controlling an end effector by using a parallel link mechanism is inappropriate.

Singular points are one factor that produces such a case. That is, when at least a part of a linkage in the parallel link mechanism takes on an orientation near a singular point, the stability of controlling the position and orientation of the end effector drops. There is also a case where the rigidity of the parallel link mechanism drops in the vicinity of a singular point.

Twisting movement in the end effector is another factor. That is, when the end effector is moved in a twisting manner (rotated) by using the parallel link mechanism, a plurality of linkages are in a twisted positional relationship. The rigidity of the parallel link mechanism drops as a result, also causing a problem in that the stability of controlling the position and orientation of the end effector drops.

The present invention has been made in light of the problems described above, and provides a work manipulator capable of improving, by using a parallel link mechanism, the stability of the position and orientation of an end effector, as well as an apparatus including the manipulator.

### [Solution to Problem]

A work manipulator according to one aspect of the present invention includes: a parallel link mechanism including six linkages arranged in parallel, each of the six linkages having one proximal link and one intermediate link; a manipulator base configured to support a proximal end of the proximal link of each of the six linkages; a distal link including six distal junctions and connected to a distal end of the intermediate link of each of the six linkages at corresponding ones of the six distal junctions; an end effector supported by the distal link; and six proximal actuators each configured to move the proximal link of a corresponding one of the six linkages relative to the manipulator base to move the distal link, thereby moving the end effector. The six distal junctions of the distal link are arranged about a first axis of the distal link. When the six distal junctions are taken as first, second, third, fourth, fifth, and sixth distal junctions in order along a periphery of the first axis, and when viewed along the first axis, an angle between the first and second distal junctions is taken as a first angle, an angle between the second and third distal junctions is taken as a second angle, an angle between the third and fourth distal junctions is taken as a third angle, an angle between the fourth and fifth distal junctions is taken as a fourth angle, an angle between the fifth and sixth distal junctions is taken as a fifth angle, and an angle between the sixth and first distal junctions is taken as a sixth angle, the first, third, and fifth angles are an angle α, the second, fourth, and sixth angles are an angle β, and the angle α is larger than the angle β.

According to another aspect of the present invention, a system controlling a position and an orientation of an end effector includes a work manipulator configured to move the end effector and a control device configured to control the work manipulator. The work manipulator includes a parallel link mechanism and a rotary actuator. The parallel link mechanism has a distal link configured to support the end effector, a plurality of linkages disposed in parallel, and configured to move the distal link, and a linkage actuator configured to move the plurality of linkages. The rotary actuator is provided between the distal link and the end effector, and is configured to control a roll angle of the end effector.

In this system, the control device is configured to receive a first control command pertaining to the position and the orientation of the end effector, and extract, from the first control command, a first control component pertaining to the roll angle of the end effector. The control device is configured to, when the first control component does not exceed a pre-set threshold, control only the linkage actuator, among the linkage actuator and the rotary actuator, according to the first control command. The control device is configured to, when the first control component exceeds the threshold, calculate a second control component pertaining to the roll angle by subtracting the threshold from the first control component, and calculate a second control command by subtracting the second control component from the first control command. The control device is configured to control the rotary actuator in accordance with the second control component pertaining to the roll angle, and control the linkage actuator in accordance with the second control command.

Alternatively, the control device of the system may operate as follows. That is, the control device is configured to, when a control component pertaining to a roll angle of the end effector is not included in the first control command pertaining to the position and the orientation of the end effector, control only the linkage actuator, among the linkage actuator and the rotary actuator, according to the first control command. On the other hand, the control device is configured to, when the control component pertaining to the roll angle is included in the first control command, calculate the second control command by subtracting the control component pertaining to the roll angle from the first control command. The control device is configured to control the rotary actuator in accordance with the control component pertaining to the roll angle, and control the linkage actuator in accordance with the second control command.

### [Advantageous Effects of Invention]

According to the present invention, the stability of control of the position and orientation of an end effector can be improved.

### [Brief Description of Drawings]

[Fig. 1]

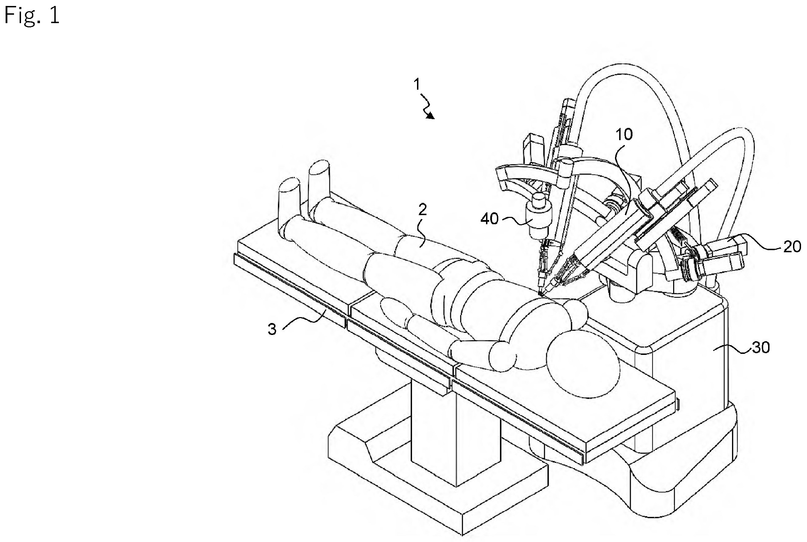

   Fig. 1 is a perspective view of the overall configuration of a system according to an embodiment.
[Fig. 2]

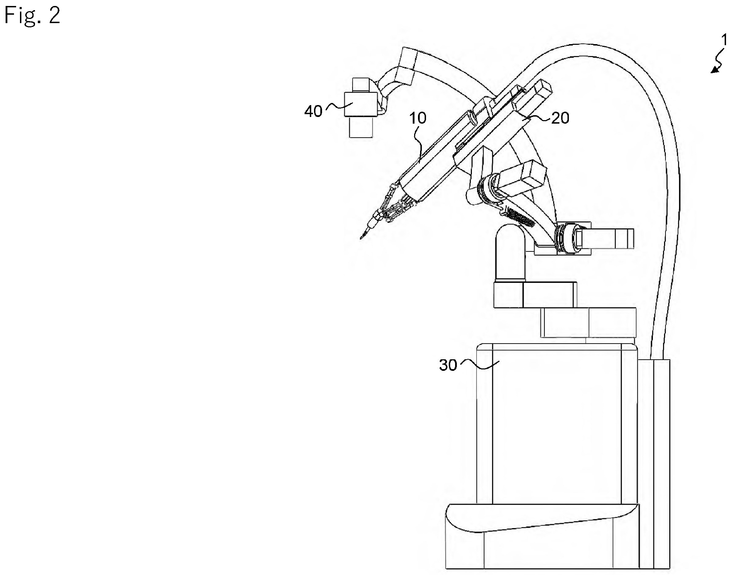

   Fig. 2 is a perspective view of the overall configuration of the system according to the embodiment.
[Fig. 3]

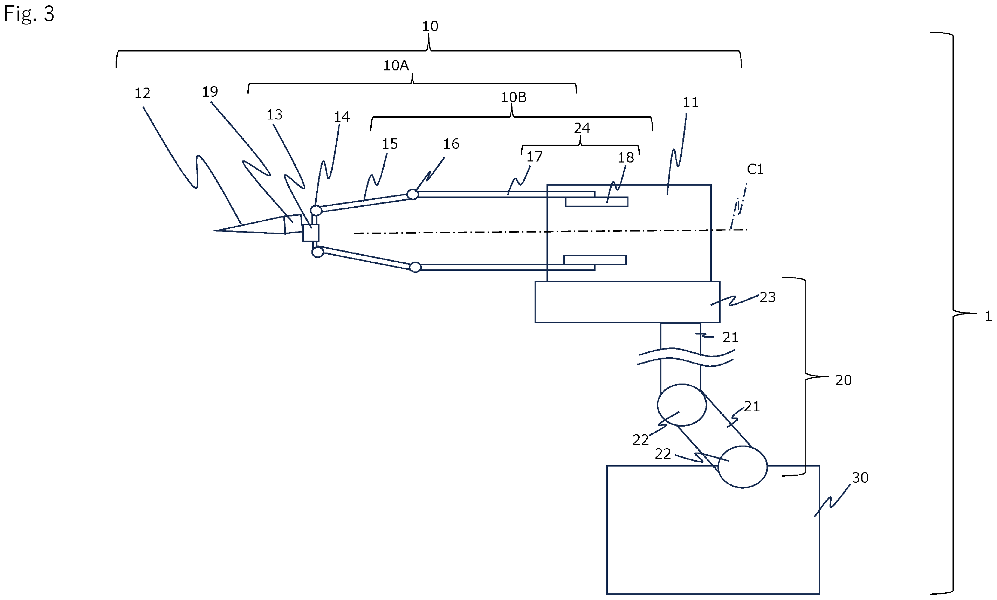

   Fig. 3 is a schematic diagram illustrating the configuration of a work manipulator according to the embodiment.
[Fig. 4]

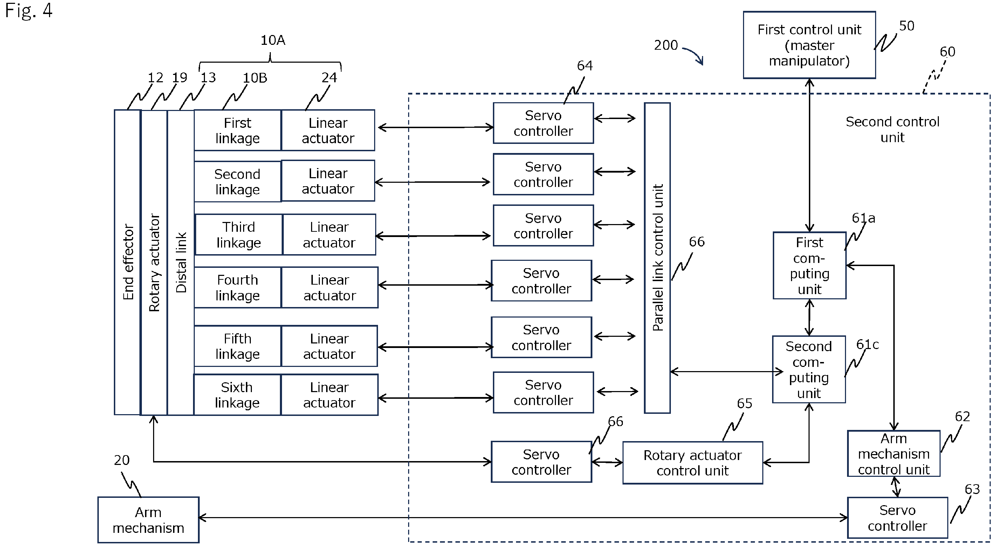

   Fig. 4 is a block diagram illustrating the overall configuration of a control device of the system according to the embodiment.
[Fig. 5]

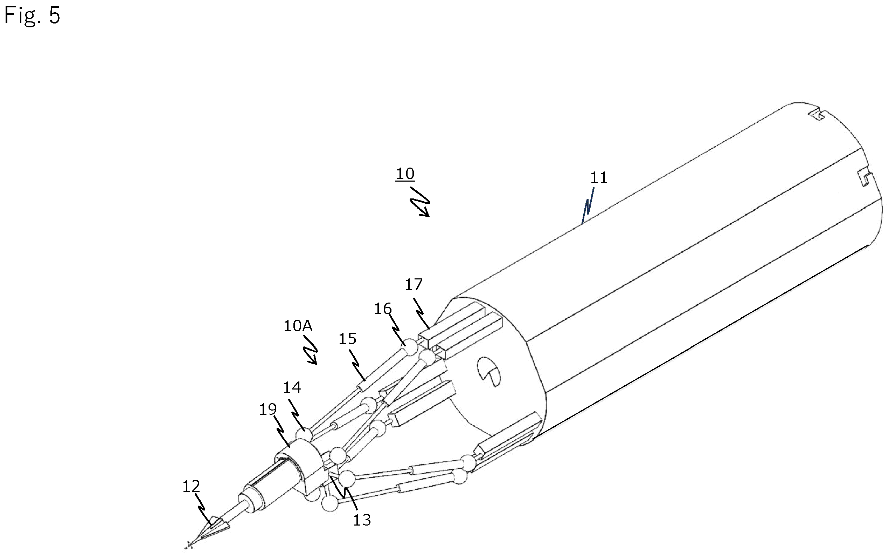

   Fig. 5 is a perspective view illustrating the work manipulator according to the embodiment.
[Fig. 6]

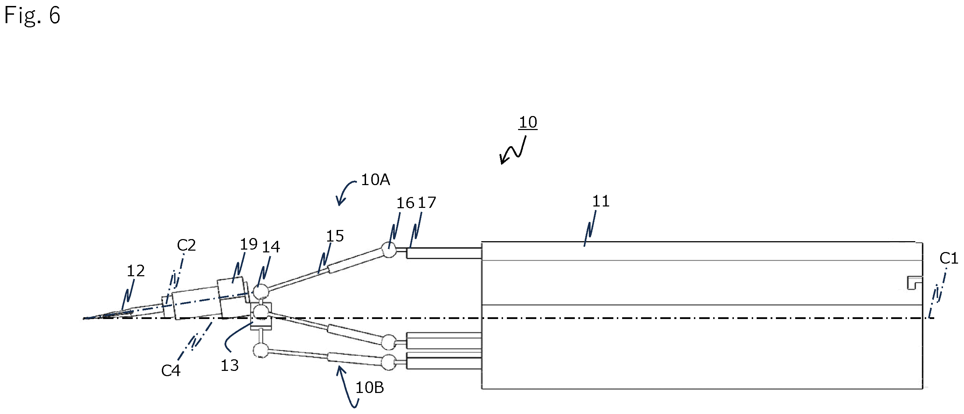

   Fig. 6 is a side view illustrating the work manipulator according to the embodiment.
[Fig. 7]

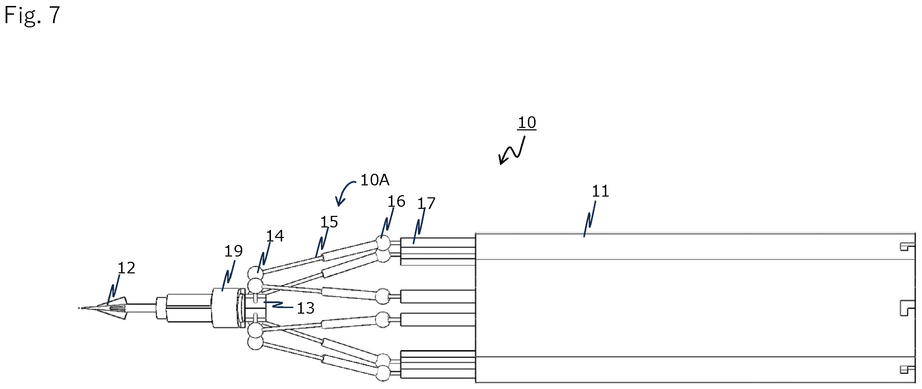

   Fig. 7 is a plan view illustrating the work manipulator according to the embodiment.
[Fig. 8]

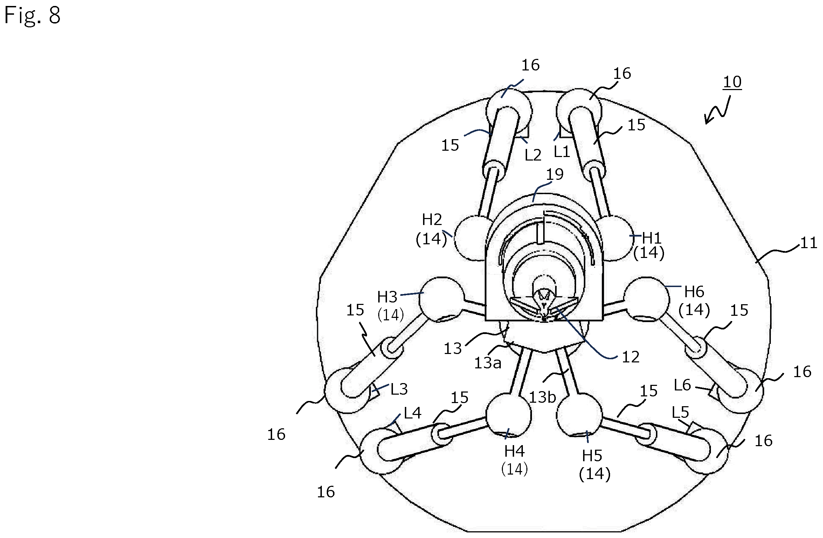

   Fig. 8 is a front view of a parallel link mechanism of the work manipulator according to the embodiment.
[Fig. 9]

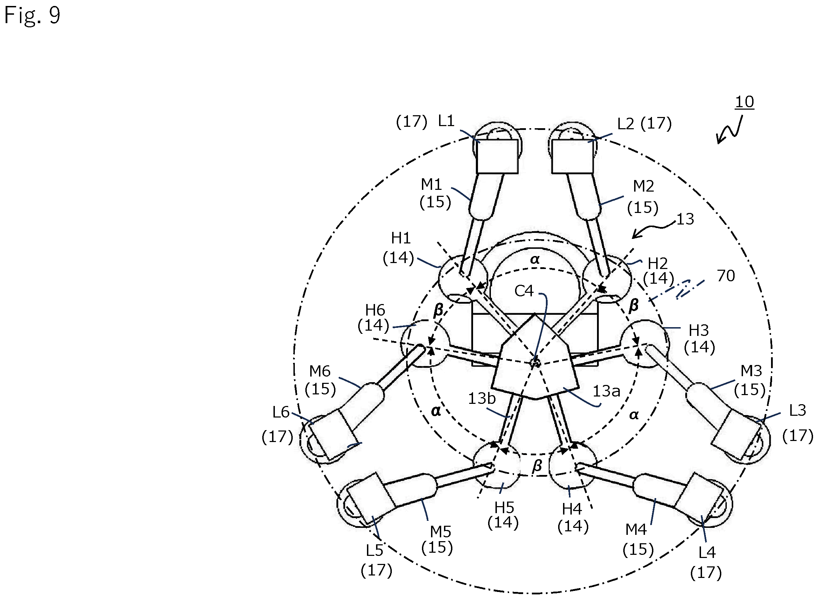

   Fig. 9 is a rear view of a distal link and six linkages in the parallel link mechanism of the work manipulator according to the embodiment.
[Fig. 10]

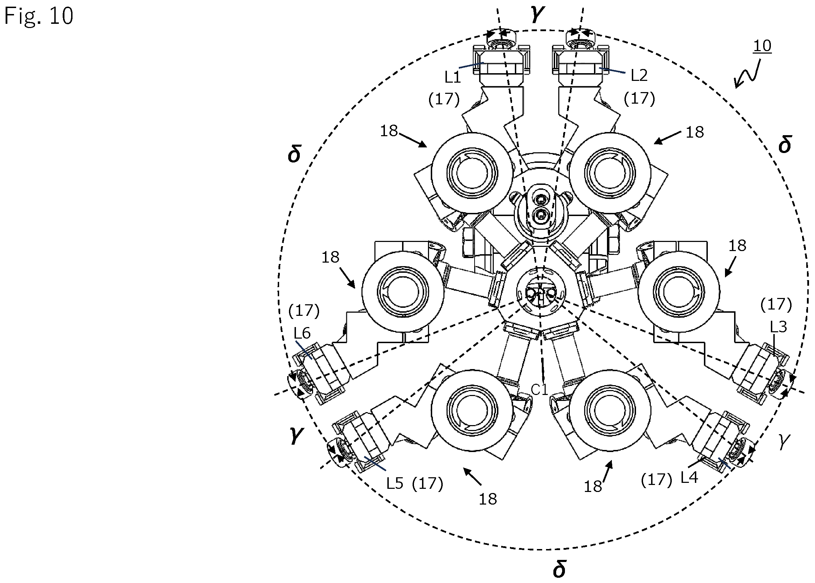

   Fig. 10 is a rear view of the six linkages and six linear actuators in the parallel link mechanism of the work manipulator according to the embodiment.
[Fig. 11]

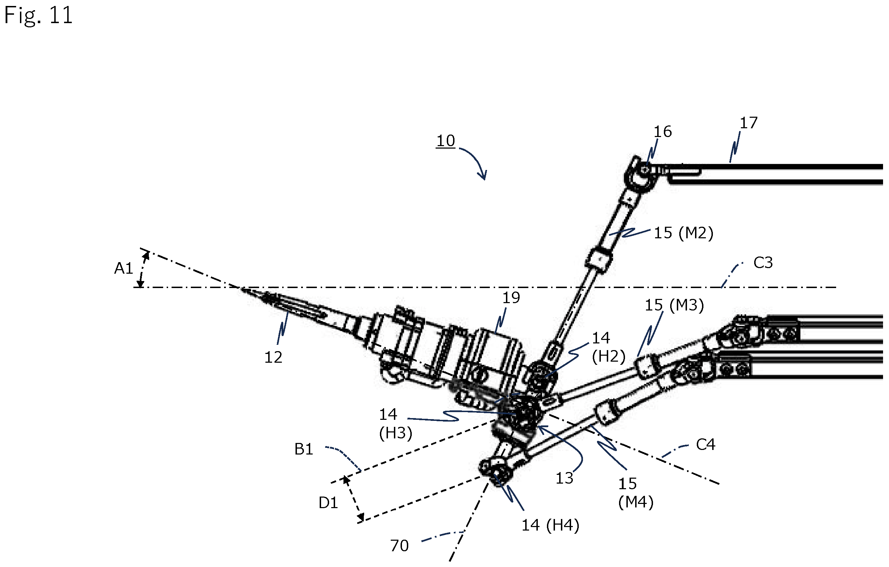

   Fig. 11 is a side view illustrating an example of an orientation at a singular point in the work manipulator according to the embodiment.
[Fig. 12]

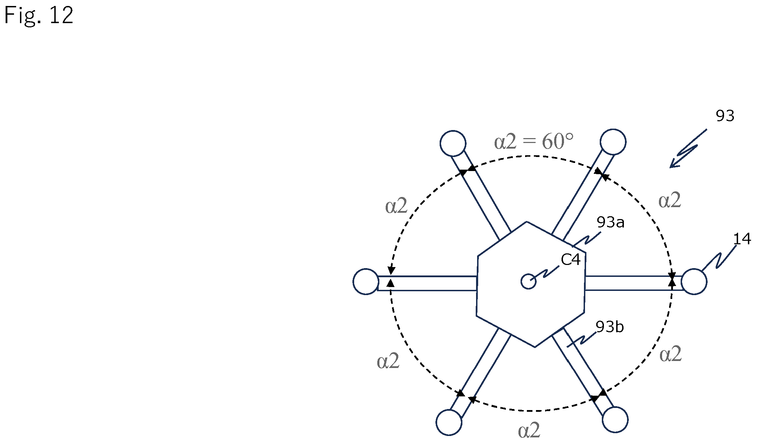

   Fig. 12 is a rear view of a distal link according to a comparative example.
[Fig. 13]

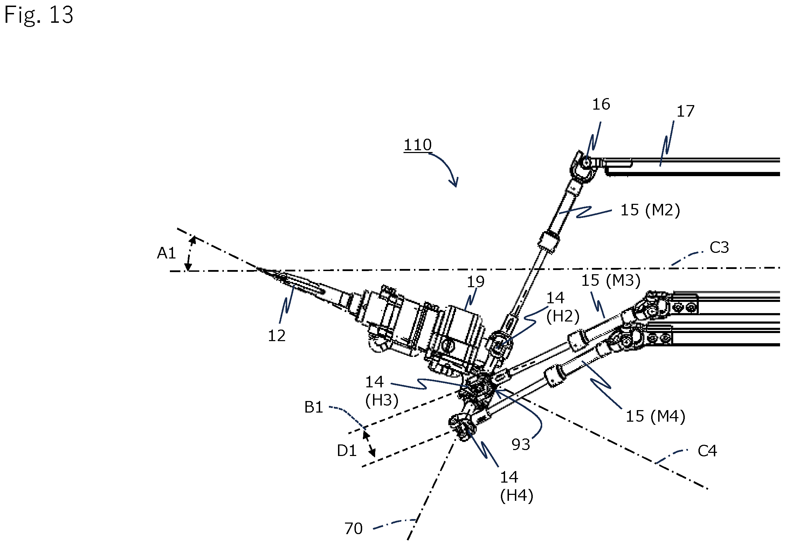

   Fig. 13 is a side view illustrating an example of an orientation at a singular point in a work manipulator according to the comparative example.
[Fig. 14]

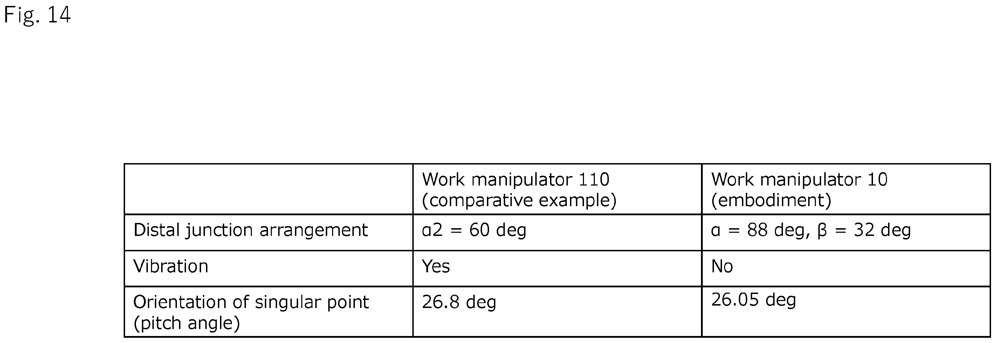

   Fig. 14 is a diagram illustrating a result of a simulation investigating control stability near a singular point.
[Fig. 15]

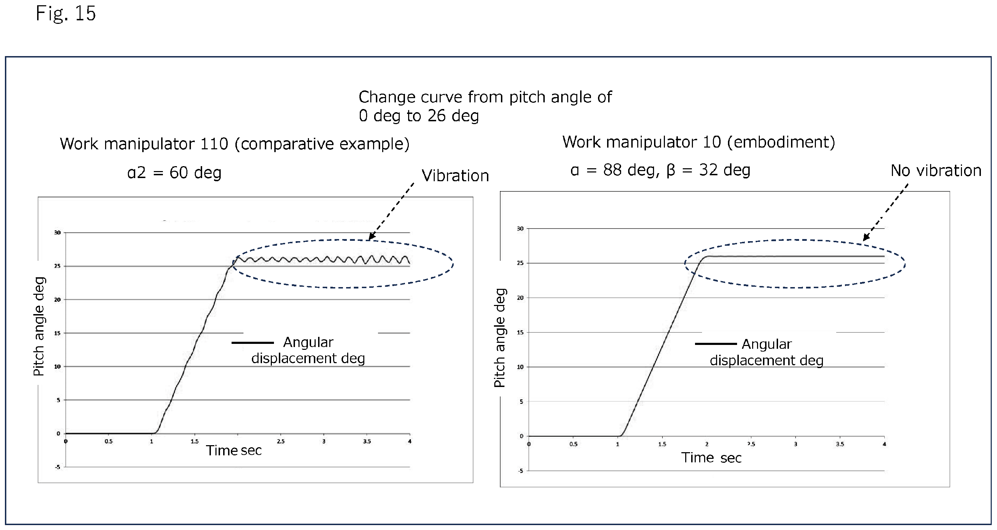

   Fig. 15 is a diagram illustrating a result of a simulation investigating control stability near a singular point.
[Fig. 16]

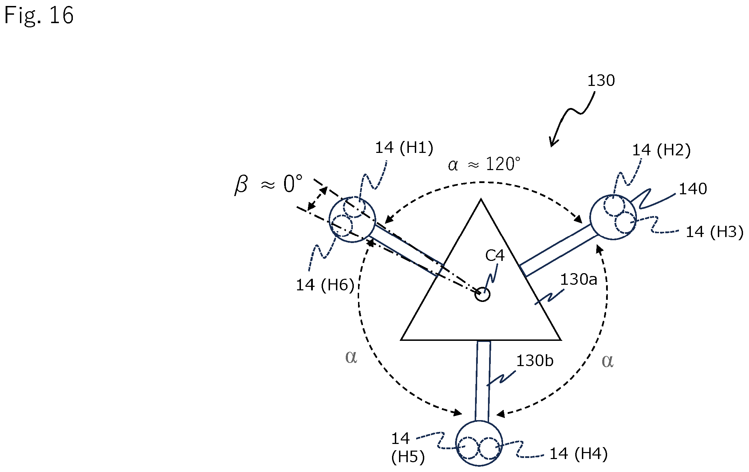

   Fig. 16 is a diagram illustrating a variation on the work manipulator.
[Fig. 17]

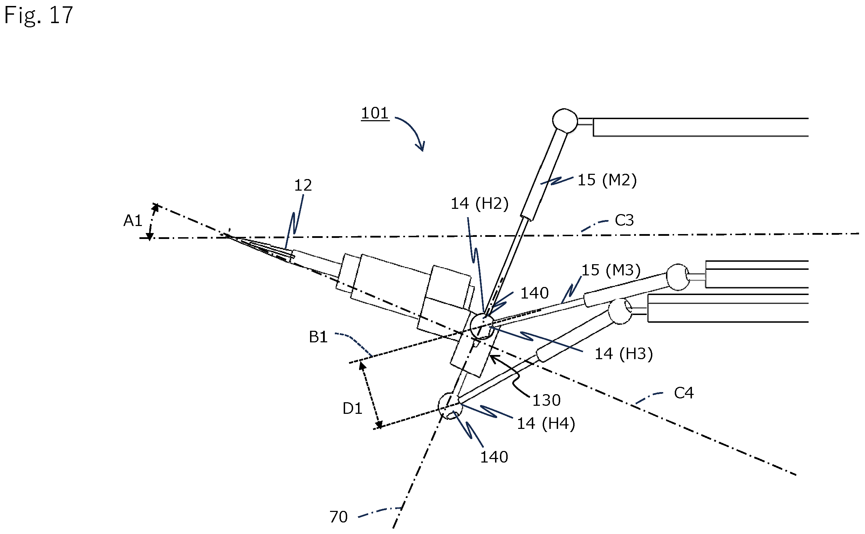

   Fig. 17 is a side view illustrating an example of an orientation at a singular point according to the variation on the work manipulator.
[Fig. 18]

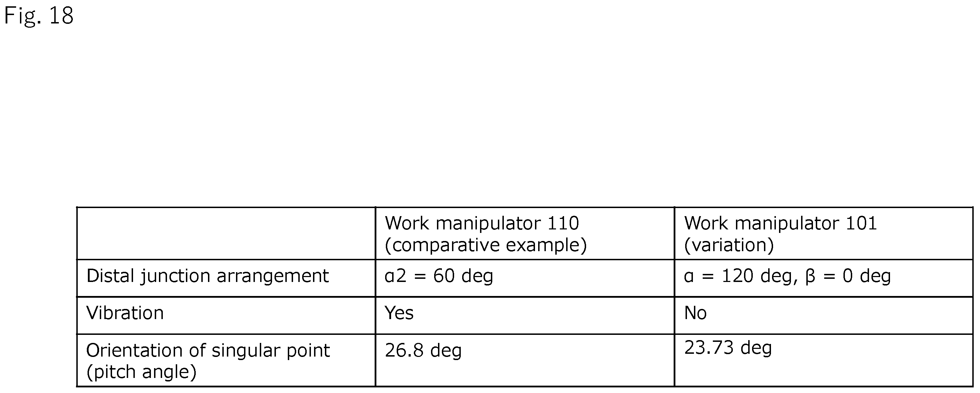

   Fig. 18 is a diagram illustrating a result of a simulation investigating control stability near the singular point according to the variation.
[Fig. 19]

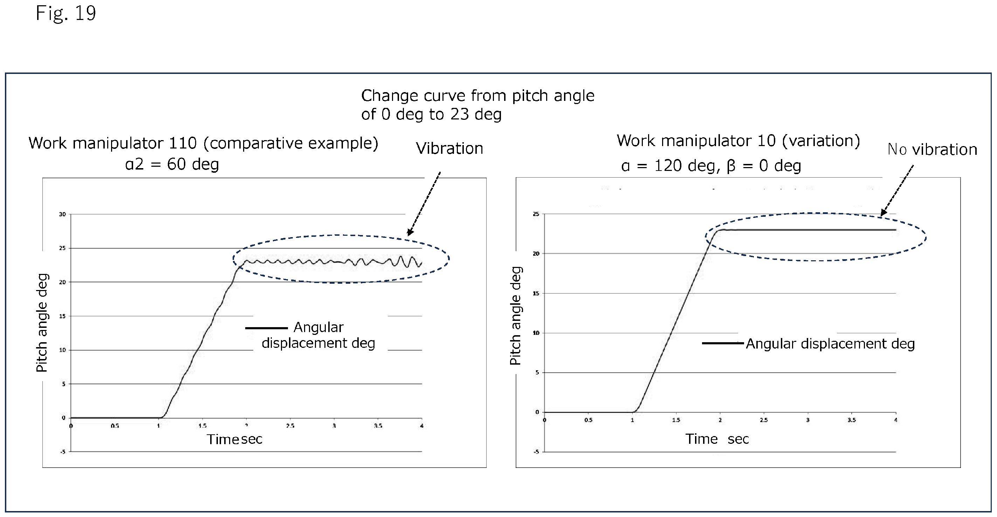

   Fig. 19 is a diagram illustrating a result of a simulation investigating control stability near the singular point according to the variation.
[Fig. 20]

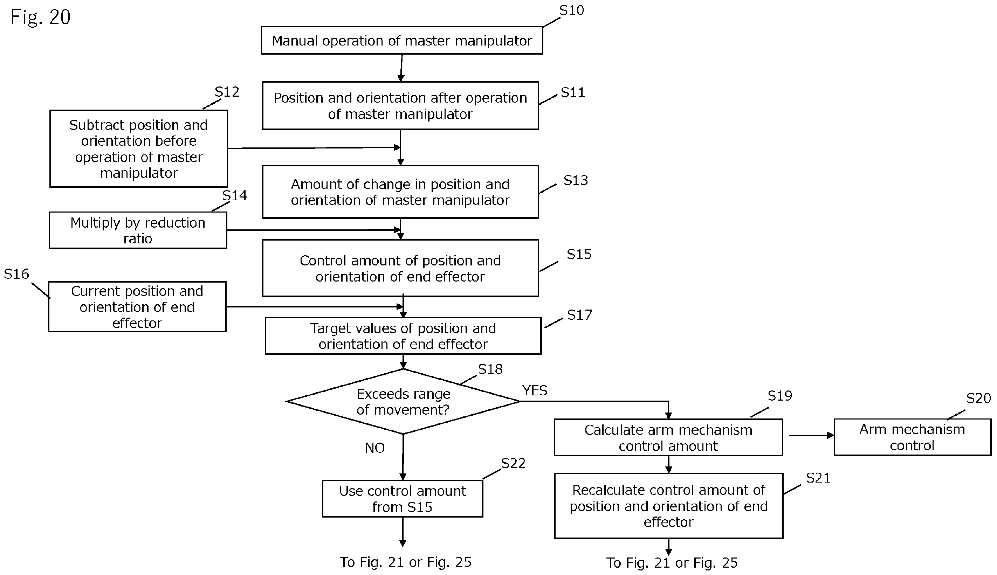

   Fig. 20 is a flowchart illustrating an example of operations by the control device of the system according to the embodiment.
[Fig. 21]

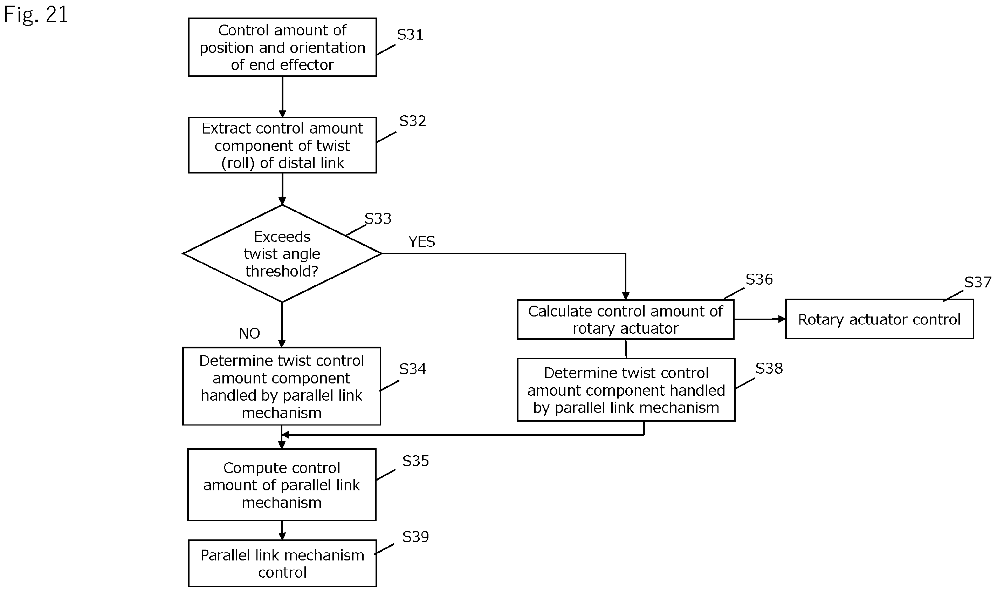

   Fig. 21 is a flowchart illustrating an example of operations by the control device of the system according to the embodiment.
[Fig. 22]

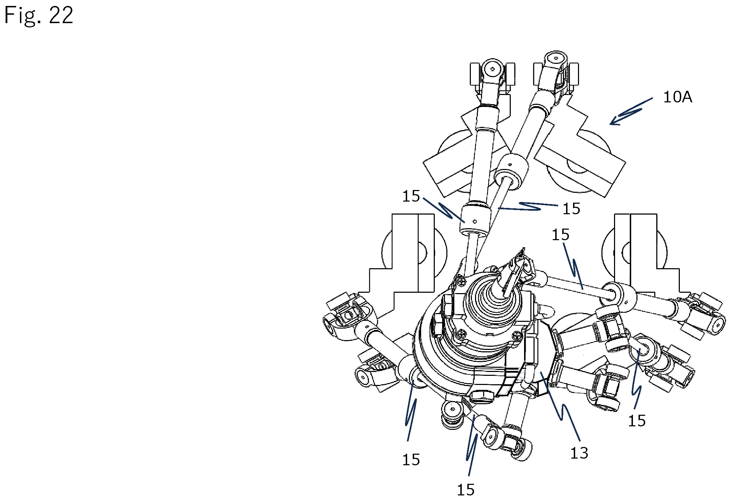

   Fig. 22 is a front view illustrating an example of the orientations of six intermediate links when the work manipulator twists (rolls) according to the embodiment.
[Fig. 23]

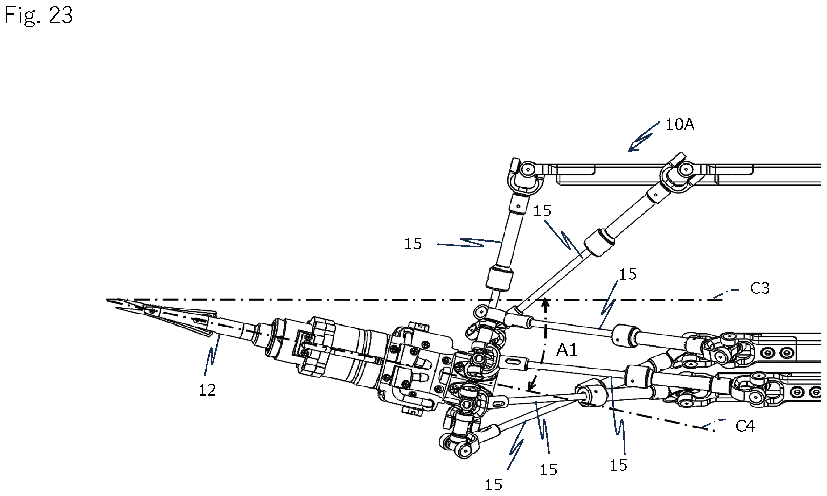

   Fig. 23 is a side view illustrating an example of the orientations of the six intermediate links when the work manipulator twists (rolls) according to the embodiment.
[Fig. 24]

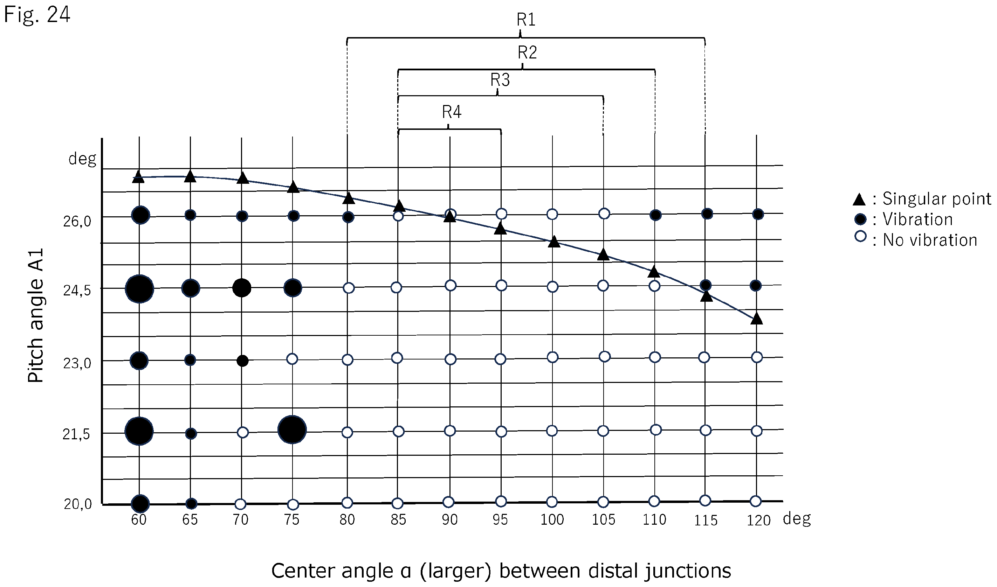

   Fig. 24 illustrates a result of a computer simulation in which a relationship between displacement of a center angle between distal junctions and vibration in an end effector is examined when a distal link 13 is inclined from a pitch angle of zero to the vicinity of a singular point.
[Fig. 25]

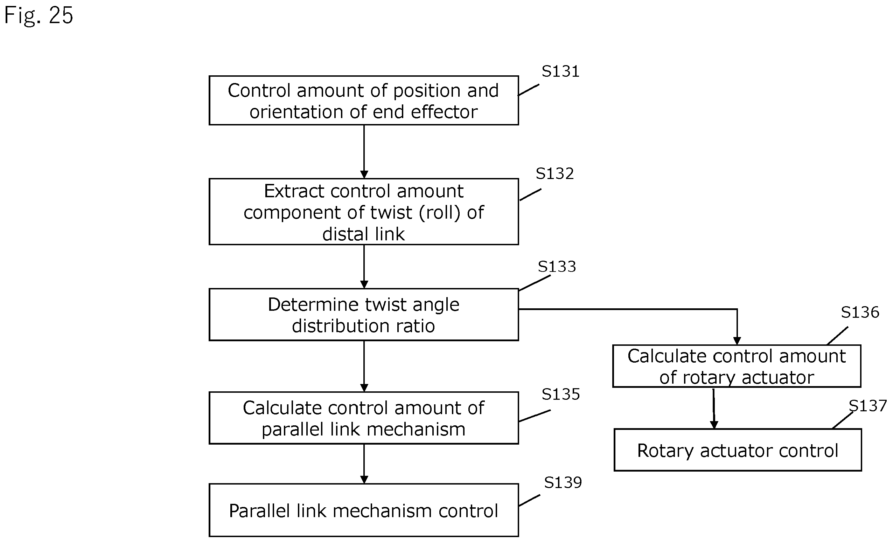

   Fig. 25 is a flowchart illustrating another example of operations by the control device of the system according to the embodiment.
[Fig. 26]

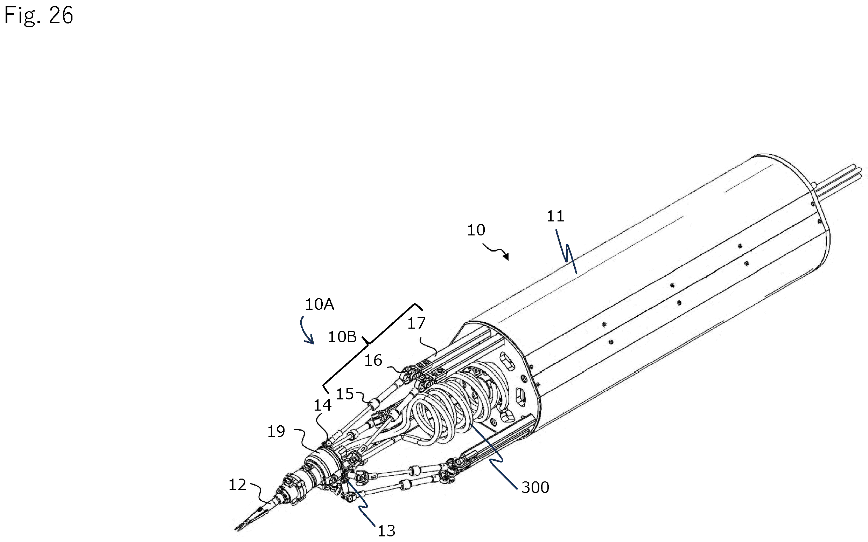

   Fig. 26 illustrates a member that sends power or signals to a device on the distal link of the system according to the embodiment.

### [Description of Embodiments]

An exemplary embodiment of the present invention will be described hereinafter with reference to the drawings. It should be noted that the embodiment described hereinafter is not intended to limit the invention as set forth in the claims, and that not all elements and combinations thereof described in the embodiment are necessarily essential as means to solve the invention. Although the following descriptions are limited to an embodiment in which the present invention is applied in a surgical support robot, the present invention is not limited to a surgical support robot, and can also be applied broadly in general industrial robots.

Note also that in the drawings described in the embodiment, parts having identical functions will be assigned the same reference signs, and redundant descriptions thereof will be omitted. In addition, dot-dash lines or dotted lines in the drawings are not lines expressing configurations in the present embodiment, but are imaginary lines for the purpose of describing the present embodiment.

The present embodiment will describe, as an example, a system 1 configured as a surgical support robot including a work manipulator 10 that handles microsurgeries.

As illustrated in Figs. 1 to 4, the system 1 according to the present embodiment includes: the work manipulator 10; an arm mechanism 20 to which the work manipulator 10 is attached at a distal end; a robot base 30 that supports the arm mechanism 20; an imaging unit 40 that is also attached to the robot base 30 and that captures an image of a surgical target; a display unit (not shown) that displays the image of the surgical target acquired by the imaging unit 40 to a user in a visible manner; a first control unit (a master manipulator) 50 that receives input instructions produced by operations made by the user; and a second control unit 60 that controls the work manipulator 10 and the arm mechanism 20 in accordance with input instructions from the first control unit 50. A control device including the first and second control units 50 and 60 will be described in detail later.

The robot base 30 includes a movement mechanism (not shown), and is configured to be capable of moving on a floor of an operating room (not shown) along with the work manipulator 10, the arm mechanism 20, and the imaging unit 40 provided on the robot base 30. As a result, the system 1 is capable of moving toward and away from an operating table 3 on which a patient 2, who is the surgical target illustrated in Fig. 1, is lying, and is furthermore capable of positioning at least a distal end of the work manipulator 10 at a surgical site of the patient 2.

The imaging unit 40 captures an image of a tip of an end effector 12 (e.g., forceps) on the work manipulator 10 (described later) and the surgical target, and is disposed in a position capable of capturing an overview of at least the distal end of the work manipulator 10 and the surgical target, for example. The imaging unit 40 is a publicly-known video camera capable of acquiring high-resolution captured images that ensure reproducibility even when enlarged to a magnification similar to that seen through a conventional microsurgery microscope.

The arm mechanism 20 is located between the robot base 30 and the work manipulator 10, and enables the position and orientation of the work manipulator 10 to be changed with respect to the robot base 30. The arm mechanism 20 includes, for example, a plurality of arms 21 variably connected in series through a plurality of arm junctions 22. A wrist 23 supporting the work manipulator 10 is connected to the distal end of the arm mechanism 20. The arm mechanism 20 is configured to have three degrees of rotational freedom and one degree of translational freedom in the radial direction, for example, but is not limited to such a configuration. Additionally, in the example illustrated here, the robot base 30 is provided with a pair of arm mechanisms 20 and work manipulators 10, but the numbers of arm mechanisms 20 and work manipulators 10 are not particularly limited.

The first control unit 50 includes, for example, an operation input unit (not shown) operated by the user and a support mechanism unit (not shown) that supports the operation input unit. For example, the support mechanism unit supports the operation input unit so as to be mobile with a similar six degrees of freedom to the work manipulator, acquires information on the position and orientation of the operation input unit corresponding to the support mechanism unit, and passes this information to the second control unit 60 of the work robot. As a result, work operations of the system 1 are executed by the user operating the operation input unit.

The work manipulator 10 will be described next with reference to Figs. 3 and 5 to 7.

The work manipulator 10 includes a manipulator base 11, a parallel link mechanism 10A, a rotary actuator 19, and the end effector 12. The manipulator base 11 is supported by the arm mechanism 20. The parallel link mechanism 10A is attached to the manipulator base 11. The end effector 12 is mounted to a distal end of the parallel link mechanism 10A via the rotary actuator 19. The parallel link mechanism 10A controls the position and orientation of the end effector 12. The rotary actuator 19 controls twisting (= rolling) of the end effector 12.

The parallel link mechanism 10A has six linkages 10B arranged in parallel, one distal link 13, and six distal junctions 14 respectively connecting the six linkages 10B to the one common distal link 13, for example. A proximal end of each of the six linkages 10B is supported by the manipulator base 11. Although a plural number aside from six linkages 10B may be provided in the parallel link mechanism 10A, the following will describe six as an example.

Each of the six linkages 10B includes a linear actuator 24 as an example of a linkage actuator (e.g., a linear motor having a stator 18 and a movable part (called a "proximal link 17" hereinafter)), a proximal junction 16, and an intermediate link 15. The intermediate link 15 and the proximal link 17 have a generally rod-like shape that is highly rigid and resistant to deformation. A distal end of the intermediate link 15 is connected to the distal link 13 via the distal junction 14. A proximal end of the intermediate link 15 is connected to the distal end of the proximal link 17 via the proximal junction 16. A proximal end of the proximal link 17 of the linear actuator 24 is attached to the manipulator base 11 via the stator 18. The intermediate link 15 extends in a direction parallel to a central axis C1 of the parallel link mechanism 10A, for example. The linear actuator 24 can cause the intermediate link 15 to move back and forth in a linear manner in a longitudinal direction thereof (a direction parallel to the central axis C1).

The proximal junction 16 is a universal junction having, for example, a degree of freedom of rotation about each of two axes orthogonal to each other, and connects the proximal link 17 and the intermediate link 15. The distal junction 14 is also a universal junction having, for example, a degree of freedom of rotation about each of two axes orthogonal to each other, and connects the intermediate link 15 and the distal link 13.

In addition, the intermediate link 15 is constituted by two generally rod-shaped members connected to each other so as to be capable of rotating about the longitudinal axis thereof, and a degree of freedom in the mutual rotation about the longitudinal axis is provided between the distal end and the proximal end of the intermediate link 15. Note that the proximal junction 16 and the distal junction 14 may be ball joints having an even higher degree of freedom of rotation.

The six linear actuators 24 are supported by the manipulator base 11 to move the six linkages 10B, respectively. The linear actuator 24 is, for example, a linear motor having a stator 18 and a movable part (the proximal link) 17. For example, each stator is fixed to the manipulator base 11, each movable part is fixed to the proximal end of the proximal link 17, and each movable part is capable of linear movement back and forth relative to the corresponding stator along the longitudinal direction of the proximal link 17. For example, the stator may be a permanent magnet, and the movable part may be a coil capable of sliding relative to the permanent magnet. This enables the corresponding stator 18 to move each of the plurality of proximal links 17 linearly in a longitudinal direction thereof (a direction parallel to the central axis C1).

The linear actuator 24 employs a linear motor, which makes it possible to reduce the number of mechanical moving parts compared to other linear movement mechanisms such as ball screws. This also makes it possible to reduce areas of contact involving sliding or rolling movement, eliminates backlash, increases the overall reliability of the mechanism, and reduces friction resistance, which reduces the power required to be consumed for operation.

The distal ends of the six linkages 10B of the parallel link mechanism 10A (i.e., the distal ends of the six intermediate links 15) are connected to the one common distal link 13 via the six distal junctions 14, respectively.

As illustrated in Figs. 8 and 9, the distal link 13 includes a main member 13a located in the center thereof, six fingers 13b extending from the main member 13a radially about the main member 13a, and the six distal junctions 14 provided for corresponding ones of the six fingers 13b. The distal link 13 is connected to the distal ends of the intermediate links 15 of the six linkages 10B via the corresponding distal junctions 14 of the six fingers 13b.

The distal link 13 supports the end effector 12. For example, the rotary actuator 19 is attached to the distal end of the distal link 13, and the end effector 12 is attached to the distal end of the rotary actuator 19.

As illustrated in Fig. 6, for example, when the positions and orientations of the six linkages 10B of the parallel link mechanism 10A are the same as each other (i.e., the amounts of movement of the six linear actuators 24 are the same), a central axis C4 of the distal link 13 coincides with the central axis C1 of the parallel link mechanism 10A (and the manipulator base 11).

Additionally, in the example illustrated in Fig. 6, the end effector 12 and the rotary actuator 19 have an identical central axis C2, and the central axis C2 is inclined slightly relative to the central axis C4 of the distal link 13. A tip of the end effector 12 is disposed on the central axes C2 and C4. However, the arrangement of the rotary actuator 19 and the arrangement of the tip of the end effector 12 are not limited to this example.

The parallel link mechanism 10A can provide six degrees of freedom for the distal link 13 simply by directly moving the plurality of linkages 10B by the linear actuators 24, and the position and the orientation of the distal link 13 and the end effector 12 relative to the manipulator base 11 can be changed with a considerable level of freedom.

In addition, by including the rotary actuator 19, the work manipulator 10 can tolerate various movements involving changes in the position and orientation of the end effector 12 provided at the distal end relative to the manipulator base 11 over a total of six degrees of freedom, namely three degrees of freedom of movement in three axes orthogonal to each other and three degrees of rotation about each of the three axes, similar to when the end effector 12 is supported by a human hand.

In the following descriptions, the six distal junctions 14 and six linkages 10B illustrated in the rear view of the distal link 13 and the surrounding components thereof in Fig. 9 may be distinguished from each other by assigning the modifiers "first", "second", "third", "fourth", "fifth", and "sixth" thereto, in clockwise order about the central axis C4 of the distal link 13. For example, a first intermediate link 15 of a first linkage 10B is connected to a first distal junction H1 (14). A second intermediate link 15 of a second linkage 10B is connected to a second distal junction H2 (14). A third intermediate link 15 of a third linkage 10B is connected to a third distal junction H3 (14). A fourth intermediate link 15 of a fourth linkage 10B is connected to a fourth distal junction H4 (14). A fifth intermediate link 15 of a fifth linkage 10B is connected to a fifth distal junction H5 (14). A sixth intermediate link 15 of a sixth linkage 10B is connected to a sixth distal junction H6 (14).

The six distal junctions 14 (which may also be called the distal ends of the six intermediate links 15) of the distal link 13 are arranged on a single imaginary plane 70 along a single circle centered on the central axis C4, for example, as illustrated in Fig. 9. When a certain intermediate link 15 takes an orientation in which the longitudinal direction thereof is parallel to the imaginary plane 70 (i.e., the intermediate link 15 lies on the imaginary plane 70), the ability to control the orientation of the distal link 13 handled by the intermediate link 15 worsens. Such an orientation of the intermediate link 15 can be called a singular point of that intermediate link 15. If the orientations of some intermediate links 15 among the six intermediate links 15 approach the singular points, there is a risk that the stability of the control of the orientations of the distal link 13 by the parallel link mechanism 10A will drop. In the present embodiment, measures are taken to reduce the effects of such singular points with respect to the arrangement of the six distal junctions 14, as will be described below.

Here, as illustrated in Fig. 9, with respect to the arrangement of the six distal junctions as viewed from the central axis C4 of the distal link 13, with the central axis C4 serving as a point of intersection, an angle between the first and second distal junctions H1 and H2 will be called a first angle; an angle between the second and third distal junctions H2 and H3, a second angle; an angle between the third and fourth distal junctions H3 and H4; a third angle; an angle between the fourth and fifth distal junctions H4 and H5, a fourth angle, an angle between the fifth and sixth distal junctions H5 and H6, a fifth angle; and an angle between the sixth and first distal junctions H6 and H1, a sixth angle. The first, third, and fifth angles are larger than the second, fourth, and sixth angles. In other words, the first to sixth angles are set so that the relatively large angles and the relatively small angles are located alternately along a single direction of rotation about the central axis C4 (e.g., the clockwise direction). Specifically, as illustrated in Fig. 9, the first, third, and fifth angles are set to the same angle α, the second, fourth, and sixth angles are set to the same angle β, and the angle α is larger than the angle β.

For example, the angle α is larger than 60 degrees and smaller than 120 degrees, the angle β is larger than 0 degrees and smaller than 60 degrees, and the angle α and the angle β add up to 120 degrees. The angle α may be 80 degrees or more and 115 degrees or less, and the angle β may be 5 degrees or more and 40 degrees or less. The angle α may be 85 degrees or more and 110 degrees or less, and the angle β may be 10 degrees or more and 35 degrees or less. The angle α may be 85 degrees or more and 105 degrees or less, and the angle β may be 15 degrees or more and 35 degrees or less. The angle α may be 85 degrees or more and 95 degrees or less, and the angle β may be 25 degrees or more and 35 degrees or less. This will be described in detail later.

The arrangement of the first to sixth distal junctions 14 described above can be described as follows as another aspect. Here, a distance between the first and second distal junctions H1 and H2 will be called a first distance; a distance between the second and third distal junctions H2 and H3, a second distance; a distance between the third and fourth distal junctions H3 and H4, a third distance; a distance between the fourth and fifth distal junctions H4 and H5, a fourth distance; a distance between the fifth and sixth distal junctions H5 and H6, a fifth distance; and a distance between the sixth and first distal junctions H6 and H1, a sixth angle. The first, third, and fifth distances are longer than the second, fourth, and sixth distances. In other words, the first to sixth distances are set so that the relatively long distances and the relatively short distances are located alternately along a single direction of rotation about the central axis C4 (e.g., the clockwise direction). Specifically, as illustrated in Fig. 9, the first, third, and fifth distances are set to the same distance (a distance corresponding to the angle α), the second, fourth, and sixth angles are set to the same distance (a distance corresponding to the angle β), and the former distance is longer than the latter distance.

Because the six distal junctions 14 described above are arranged at uneven intervals about the central axis C4, the stability of the control of the position and orientation of the end effector 12 by the parallel link mechanism 10A can be improved even when some of the intermediate links 15 take on an orientation near a singular point, as will be described later.

The six linkages 10B of the parallel link mechanism 10A are disposed about the central axis C1 of the parallel link mechanism 10A. For example, as illustrated in Figs. 9 and 10, the six proximal links 17 are arranged along a single circle about the central axis C1. The diameter of the circle is larger than the diameter of the circle in which the distal junctions 14 are disposed. Accordingly, each linkage 10B usually bends at the proximal junction 16, and the proximal link 17 and the intermediate link 15 do not fall on a straight line (a singular point orientation).

Here, in the rear view illustrated in Fig. 10, the six linkages 10B will be called first, second, third, fourth, fifth, and sixth linkages, in clockwise order about the central axis C1, and the six proximal links 17 of the first, second, third, fourth, fifth, and sixth linkages will be called first, second, third, fourth, fifth, and sixth proximal links (L1, L2, L3, L4, L5, and L6), respectively.

In the rear view illustrated in Fig. 10, with the central axis C1 serving as a point of intersection, an angle between the first and second proximal links L1 and L2 will be called a seventh angle; an angle between the second and third proximal links L2 and L3, an eighth angle; an angle between the third and fourth proximal links L3 and L4, a ninth angle; an angle between the fourth and fifth proximal links L4 and L5, a tenth angle; an angle between the fifth and sixth proximal links L5 and L6, an eleventh angle; and an angle between the sixth and first proximal links L6 and L1, a twelfth angle. The seventh, ninth, and eleventh angles are set to be smaller than the eighth, tenth, and twelfth angles. In other words, the seventh to twelfth angles are set so that the relatively small angles and the relatively large angles are located alternately along a single direction of rotation about the central axis C1 (e.g., the clockwise direction). Specifically, for example, as illustrated in Fig. 10, the seventh, ninth, and eleventh angles are set to the same angle γ, the eighth, tenth, and twelfth angles are set to the same angle δ, and the angle γ is smaller than the angle δ.

The arrangement of the first to sixth proximal link 17 described above can be described as follows as another aspect. Here, a distance between the first and second proximal links L1 and L2 will be called a seventh distance; a distance between the second and third proximal links L2 and L3, an eighth distance; a distance between the third and fourth proximal links L3 and L4, a ninth distance; a distance between the fourth and fifth proximal links L4 and L5, a tenth distance; a distance between the fifth and sixth proximal links L5 and L6, an eleventh distance; and a distance between the sixth and first proximal links L6 and L1, a twelfth distance. The seventh, ninth, and eleventh distances are set to be shorter than the eighth, tenth, and twelfth distances. In other words, the seventh to twelfth distances are set so that the relatively short distances and the relatively long distances are located alternately along a single direction of rotation about the central axis C1 (e.g., the clockwise direction). Specifically, for example, as illustrated in Fig. 10, the seventh, ninth, and eleventh distances are set to the same distance (a distance corresponding to the angle γ), the eighth, tenth, and twelfth distances are set to the same distance (a distance corresponding to the angle δ), and the former distance is shorter than the latter distance.

Note that the six proximal links 17 are arranged parallel to the central axis C1. As such, the mutual arrangement relationships among the six proximal junctions 16 are similar or identical to the mutual arrangement relationships among the six proximal links 17 described above.

As described above, because the six proximal links 17 are arranged at unequal angles and distances from each other, the six intermediate links 15 are arranged as follows. That is, as illustrated in Figs. 9 and 10, the first and second intermediate links M1 and M2 are disposed such that the angle at the proximal ends thereof is the relatively small angle γ and the angle at the distal ends thereof is the relatively large angle α*.* In other words, the angle α is larger than the angle γ. A similar arrangement relationship is established between the third and fourth intermediate links M3 and M4, and between the fifth and sixth intermediate links M5 and M6. On the other hand, the second and third intermediate links M2 and M3 are disposed such that the angle at the proximal ends thereof is the relatively large angle δ and the angle at the distal ends thereof is the relatively small angle β. A similar arrangement relationship is established between the fourth and fifth intermediate links M4 and M5, and between the sixth and first intermediate links M6 and M1. In other words, the angle β is smaller than the angle δ.

Furthermore, as illustrated in Fig. 9, the first and second intermediate links M1 and M2 are disposed such that a relatively short distance (interval) is provided at the proximal ends thereof and a relatively long distance (interval) is provided at the distal ends thereof. A similar arrangement relationship is established between the third and fourth intermediate links M3 and M4, and between the fifth and sixth intermediate links M5 and M6. In other words, the distance (interval) between the proximal ends is shorter than the distance (interval) between the distal ends, between the first and second intermediate links M1 and M2, between the third and fourth intermediate links M3 and M4, and between the fifth and sixth intermediate links M5 and M6. On the other hand, the second and third intermediate links M2 and M3 are disposed such that a relatively long distance (interval) is provided at the proximal ends thereof and a relatively short distance (interval) is provided at the distal ends thereof. A similar arrangement relationship is established between the fourth and fifth intermediate links M4 and M5, and between the sixth and first intermediate links M6 and M1. In other words, the distance (interval) between the proximal ends is longer than the distance (interval) between the distal ends, between the second and third intermediate links M2 and M3, between the fourth and fifth intermediate links M4 and M5, and between the sixth and first intermediate links M6 and M1.

By arranging the six intermediate links 15 in this manner, the intermediate links 15 are not parallel to each other, and are rather arranged to be non-parallel with a relatively large angle from each other. In particular, even the first and second intermediate links M1 and M2, which are arranged at a relatively small angle γ at the proximal ends (and at a relatively large angle α at the distal ends), are arranged non-parallel to each other. Likewise, the fourth and fifth intermediate links M4 and M5 are non-parallel to each other, and the sixth and first intermediate links M6 and M1 are non-parallel to each other. This makes it possible to further stabilize the control of the orientation of the end effector 12 by the parallel link mechanism 10A.

Fig. 11 is a side view illustrating an example of the orientation at a singular point of the work manipulator 10. In this example, two adjacent ones of the six intermediate links 15, e.g., the first and second intermediate links 15 (M1 and M2), are at the orientation of a singular point (i.e., an orientation parallel to the imaginary plane 70 of the distal link 13). In this example, the two intermediate links 15 (M1 and M2) at the orientation of the singular point are located above the other intermediate links 15, and the central axis C4 of the distal link 13 is inclined upward by an angle A1 (a pitch angle) relative to a horizontal direction C3. In this example, the two intermediate links 15 (M1 and M2) at the singular point cannot control the pitch angle of the distal link 13.

In actuality, the work manipulator 10 is controlled such that none of the six intermediate links 15 take on an orientation of a singular point. However, it is possible that the orientations of some of the intermediate links 15 (e.g., the first and second intermediate links 15 (M1 and M2), as illustrated in Fig. 11) approach singular points, and the ability to control the orientations of those intermediate links 15 will worsen as a result. In such a case, if the ability to control the orientations of the other intermediate links 15 remains sufficiently high, the orientations of the distal link 13 (the end effector 12) can be controlled in a stable manner by the other intermediate links 15. The ability to control the orientations of those other intermediate links 15 is affected by the arrangement of the six intermediate links 15. In other words, described using the example illustrated in Fig. 11, when the second intermediate link 15 (M2) is near the singular point, as the interval D1 between a line of action of the third intermediate link 15 (M3) and the fourth distal junction 14 (H4) increases, the ability to control the orientations of the third and fourth intermediate links 15 (M3 and M4) increases as well. In Fig. 11, when the distal link 13 is a lever and the second distal junction 14 (H3) is regarded as the fulcrum of the lever, the third distal junction 14 (H2) is the point of force, the fourth distal junction 14 (H4) is the pivot point, and the interval D1 can be regarded as the distance between the point of force and the pivot point. The interval D1 is determined by the arrangement of the six distal junctions 14 of the distal link 13.

In the present embodiment, as illustrated in Fig. 9, the six distal junctions 14 are arranged at different angles α and β that are unequal about the central axis C4 of the distal link 13. Here, as a comparative example, assume a distal link 93 in which all of the six distal junctions 14 are arranged at an equal angle α2 (= 60 degrees) about the central axis C4, as illustrated in Fig. 12. (Hereinafter, the distal link 13 according to the present embodiment may be called an "unevenly-arranged" distal link, and a distal link 93 according to the comparative example may be called an "evenly-arranged" distal link.) Assume a work manipulator 110 using an evenly-arranged distal link 93, such as that illustrated in Fig. 13, instead of the unevenly-arranged distal link 13. In the work manipulator 10 according to the present embodiment, which uses the unevenly-arranged distal link 13 illustrated in Fig. 11, the above-described interval D1 is larger than that of the work manipulator 110 using the evenly-arranged distal link 93 illustrated in Fig. 13. Accordingly, the work manipulator 10 according to the present embodiment provides higher stability for the control of the orientation of the end effector 12 than the work manipulator 110 according to the comparative example. Note that to consistently benefit from this orientation control, when significantly changing the orientation of the end effector 12 such that two adjacent intermediate links 15 in the work manipulator 10 approach the vicinity of a singular point, it is desirable to control the overall orientation of the work manipulator 10 using the arm mechanism 20 such that these two adjacent intermediate links 15 are arranged at the relatively large angle α, as with the first and second intermediate links 15 (M1 and M2), for example.

The inventors of the present invention performed a computer simulation to examine the difference in the stability of the control in the orientation near a singular point between the present embodiment and the stated comparative example. Figs. 14 and 15 indicate results thereof.

In this simulation, the larger angle α among the six distal junctions 14 according to the present embodiment illustrated in Fig. 9 was set to 88 degrees, and the smaller angle β was set to 32 degrees. The angle α2 among the distal junctions 14 according to the comparative example illustrated in Fig. 12 was set to 60 degrees. Then, as illustrated in Figs. 11 and 13, for the work manipulators 10 and 110 according to the present embodiment and the comparative example, respectively, the first and second intermediate links 15 (M1 and M2) were arranged at the highest position, a trapezoidal velocity control process of accelerating, maintaining constant speed, and decelerating was performed for a pitch angle A1 from zero to 26 degrees for the distal links 13 and 93, and the change in pitch angle A1 during this process was measured. Here, the pitch angle corresponding to the singular point of the first and second intermediate links 15 (M1 and M2) in the work manipulator 10 according to the present embodiment was 26.05 degrees, and that of the work manipulator 110 according to the comparative example was 26.8 degrees, meaning there was no significant difference between the two. The pitch angle of 26 degrees serving as the goal in the control process corresponds to the vicinity of the singular points of the work manipulators 10 and 110, respectively. As a result of this simulation, vibrations occurred in the work manipulator 110 of the comparative example, but no vibrations occurred in the work manipulator 10 of the present embodiment, as indicated in Figs 14 and 15.

A variation on the work manipulator 10 according to the present embodiment will be described next with reference to Figs. 16 and 17.

In a distal link 130 according to the variation illustrated in Fig. 16, the second, fourth, and sixth angles β between the distal junctions 14 described with reference to Fig. 9 are set to an extremely small angle, and the first, third, and fifth angles α are set to an extremely large angle. For example, the angle β is substantially 0 degrees and the angle α is substantially 120 degrees. Three fingers 130b extend from a main member 130a. Two distal junctions 14 arranged proximally at the angle β are integrated in each of junction units 140 provided in corresponding ones of the fingers 13b. Such an arrangement for the distal junctions 14 may be called an "integrated arrangement" hereinafter. In a work manipulator 101 according to the variation illustrated in Fig. 17, the distal link 130 having an integrated arrangement is used, and two intermediate links 15 adjacent at the relatively large angle δ (e.g., the second and third intermediate links 15 (M2 and M3)) are connected to corresponding ones of the junction units 140. In reality, the angle β may be set to be larger than 0 degrees and smaller than 15 degrees, and the angle α may be set to be larger than 105 degrees and smaller than 120 degrees. As illustrated in Fig. 17, the interval D1 for ensuring stability of the orientation control near the singular point may be larger than in the embodiment illustrated in Fig. 11.

The inventors of the present invention performed a simulation similar to that described above for the work manipulator 101 according to the variation illustrated in Fig. 17. In this simulation, the angle α between the distal junctions 14 of the distal link 130 according to the variation was set to the theoretical maximum limit of 120 degrees, and the angle β was set to the theoretical minimum limit of 0 degrees. The value of the pitch angle A1 corresponding to the singular point was 23.73 degrees, and thus the change in pitch angle A1 was investigated by performing trapezoidal velocity control for accelerating, maintaining constant speed, and decelerating from a pitch angle A1 of 0 degrees to 23 degrees near the singular point. For comparison, the change in pitch angle A1 was investigated by performing trapezoidal velocity control for accelerating, maintaining constant speed, and decelerating from a pitch angle A1 of 0 degrees to 23 degrees for the work manipulator 110 according to the comparative example illustrated in Fig. 13.

Figs. 18 and 19 indicate the results of the simulation. Vibrations occurred in the work manipulator 110 of the comparative example, but no vibrations occurred in the work manipulator 101 according to the variation on the present embodiment.

It was therefore confirmed that the work manipulators 10 and 101 according to the present embodiment can improve the stability of the orientation control in the vicinity of singular points compared to the work manipulator 110 according to the comparative example.

Furthermore, the inventors of the present invention performed a computer simulation to investigate the correlation between the arrangement of the six distal junctions 14 in the distal link 13 (specifically, a center angle or distance between two adjacent distal junctions 14) and the occurrence of vibration in the distal link 13 when inclined upward from a position where the pitch angle A1 of the distal link 13 is zero (i.e., when the central axis C4 of the distal link 13 is horizontal) to when the pitch angle A1 is an angle near the singular point at a constant speed. In other words, this simulation was performed to find an optimal arrangement for the distal junctions 14 in the distal link 13.

Fig. 24 indicates a result of this simulation, and indicates a relationship between the angle α (and β) between the adjacent distal junctions 14 of the distal link 13 (see Fig. 9), the pitch angle A1 at an end point (a stop point) when the distal link 13 is inclined, and the amplitude of vibrations in the end effector 12. The numerical values on the horizontal axis indicate the larger angle α between the adjacent distal junctions 14 of the distal link 13, and a value obtained by subtracting the value of the angle α from 120 degrees is the smaller angle β. The vertical axis is the pitch angle A1 at the end point (the stop point) when the distal link 13 is inclined upward at a constant speed starting from a pitch angle of zero. The amplitudes of vibrations in the end effector when inclined under various settings for the angle α and the pitch angle A1 are indicated by circles. A black circle indicates the presence of an amplitude, and the magnitude of the amplitude is indicated by the size of the black circle in three stages. A large black circle indicates an amplitude of 0.4 mm or more; a medium black circle, an amplitude of 0.2 mm or more and smaller than 0.4 mm; and a small black circle, an amplitude of 0.1 mm or more and smaller than 0.2 mm. A white circle indicates no vibration (an amplitude smaller than 0.1 mm).

The singular point of a parallel link varies depending on the angle α. The pitch angle A1 corresponding to the singular point at various angles α is indicated by black triangles in the drawing. Although this simulation includes a test of tilting the distal link 13 through the singular point to a larger pitch angle A1, it is desirable to actually stop the tilting operation before the singular point.

According to this simulation, vibrations occurred in the end effector 12 when the wider central angle (the first, third, and fifth angles in Fig. 9) α was in a range of from 60 degrees to 80 degrees. In particular, the end effector 12 exhibited an amplitude of 0.2 mm or more (medium) when the first, third, and fifth angles α were in a range of from 60 degrees to 75 degrees.

When the first, third, and fifth angles α were in a range of from 100 degrees to 120 degrees, and the inclination was made to a pitch angle A1 exceeding the singular point, the end effector 12 exhibited an amplitude of smaller than 0.2 mm (small). In reality, this result suggests that vibrations may occur when the pitch angle A1 comes very close to the singular point, even if inclination that only stops before the singular point is performed.

Therefore, from the results of this simulation, it was found that when the larger angle α between adjacent distal junctions 14 is within a range of from 80 degrees to 115 degrees (with the smaller angle β in a range of from 40 degrees to 5 degrees), vibration can be largely suppressed within a pitch angle range at equal to or smaller than the singular point of the work manipulator 10 (the range indicated by R1 in the figure). Note that when the angle α = 80 degrees and the pitch angle A1 = 26.0 degrees, minute vibrations (smaller than 0.2 mm in amplitude) occurred, but since no vibrations occur when the pitch angle A1 is equal to or smaller than 25 degrees, this range poses no problems in practice.

In addition, it was found that when the larger angle α is in the range of from 85 degrees to 110 degrees (with the smaller angle β in the range of from 35 degrees to 10 degrees), vibrations in the end effector 12 in the vicinity of the singular point of the work manipulator 10 can be suppressed to a degree that has no substantial effects (an amplitude smaller than 0.1 mm) (the range indicated by R2 in the figure).

Furthermore, it was found that when the larger angle α is set in the range of from 85 degrees to 105 degrees (with the smaller angle β in the range of from 35 degrees to 15 degrees), vibrations in the end effector 12 can be suppressed (an amplitude smaller than 0.1 mm) even in a range for the pitch angle A1 that exceeds the singular point of the work manipulator 10 (the range indicated by R3 in the figure).

In addition, as the larger angle α increases, i.e., as the degree of inequality between the angles α and β increases, the angle A1 (the pitch angle) corresponding to the singular point decreases, and thus the range of motion of the inclination also drops. If the larger angle α is too large, the smaller angle β will be too small, and the size of the distal junction 14 to be arranged in the narrow space of the angle β will become too small, which may make manufacturing difficult. Taking these factors into account, to ensure a minimum tilt range of at least 25 degrees, enable the distal junction 14 to be manufactured without any particular difficulties, and sufficiently suppress vibrations, it is considered more desirable for the larger angle α to fall within a range of from 85 degrees to 95 degrees (with smaller angle β from 35 to 25 degrees) (the range indicated by R4 in the figure).

The size of each part of the work manipulator 10 will be described here. When used in surgeries, the work manipulator 10 may be set to a size equal to or slightly smaller than a human arm, for example. The specific sizes may be set as follows. The diameter of the circle connecting the six linkages (the diameter of the circle connecting the six proximal junctions 16) may range from about 60 mm to 130 mm, and may be 95 mm, for example. The diameter of the distal link 13 (the diameter of a circle connecting the distal junctions 14) may range from about 30 mm to 80 mm, and may be 55 mm, for example. The length from the distal link 13 to the tip of the end effector 12 in the length direction of the work manipulator 10 may range from about 60 mm to 250 mm, and may be 115 mm, for example. The length from the distal junction 14 to the proximal junction 16 in the length direction of the work manipulator 10 may range from about 55 mm to 150 mm, and may be 85 mm, for example. The length of the intermediate link 15 may range from about 60 mm to 150 mm, and may be 90 mm, for example. The maximum stroke length of the proximal link 17 may range from about 50 mm to 100 mm relative to a base point (0 mm), corresponding to the position where the proximal link 17 is retracted furthest, and may be 75 mm, for example. In other words, when the proximal link 17 is extended to a maximum stroke length, the length from the base point of the proximal link 17 to the distal junction 14 may range from about 105 mm to 250 mm, and may be 160 mm, for example. Such sizes ensure the larger angle α is in a range of from 85 degrees to 95 degrees (the smaller angle β is in a range of from 35 degrees to 25 degrees) (the range indicated by R4 in Fig. 24), and are thus desirable in terms of ensuring the manufacture of the distal junction 14 is not particularly difficult as described above.

If the work manipulator 10 is too large, the work becomes difficult, and if the work manipulator 10 is too small, highly-accurate mechanical control becomes difficult. Using sizes such as those described above makes it possible for the work manipulator 10 to perform each task in surgery as a robot working in place of a human.

A control device of the system 1 including the work manipulator 10 according to the present embodiment will be described next.

Fig. 4 is a block diagram illustrating the overall configuration of the control device of the system 1 according to the present embodiment. A control device 200 includes the first control unit 50 and the second control unit 60. In the system 1 according to the present embodiment, which is configured as a surgical support robot, the first control unit 50 includes a master manipulator manually operated by a user, for example. The first control unit 50 outputs control instructions corresponding to manual operations of the master manipulator to the second control unit 60. The control instructions include operation commands pertaining to the three-dimensional position and orientation of the tip of the end effector 12, for example. The second control unit 60 controls the work manipulator 10 and the arm mechanism 20 on the basis of the control instructions from the first control unit 50.

In the second control unit 60, a first computing unit 61a ascertains operation commands pertaining to the position and orientation of the tip of the end effector 12 in response to the control instructions from the first control unit 50, and on the basis of the operation commands, calculates operation commands pertaining to the arm mechanism 20 and operation commands pertaining to the work manipulator 10. An arm mechanism control unit 62 calculates and outputs operation control values for each element of the arm mechanism 20 in response to the operation commands pertaining to the arm mechanism 20 from the first computing unit 61a. A servo controller 64 drives and controls each element of the arm mechanism 20 in response to the operation control values for each element of the arm mechanism 20.

A second computing unit 61c calculates operation commands pertaining to the parallel link mechanism 10A and operation commands pertaining to the rotary actuator 19 on the basis of the operation commands pertaining to the work manipulator 10 from the first computing unit 61a. A rotary actuator control unit 65 calculates operation control values for the rotary actuator 19 in response to the operation commands pertaining to the rotary actuator 19 from the second computing unit 61c, and outputs the operation control values to a servo controller 66. The servo controller 66 drives and controls the rotary actuator 19 on the basis of the operation control values for the rotary actuator 19. A parallel link control unit 63 calculates operation control values for the six linkages 10B (i.e., the six linear actuators 24) in response to the operation commands pertaining to the parallel link mechanism 10A from the second computing unit 61c. The six servo controllers 64 drive and control corresponding ones of the six linear actuators 24 in response to the operation control values for the six linear actuators 24. Each servo controller 64 drives the linear motor of the corresponding linkage in response.

Figs. 20 and 21 are flowcharts illustrating an example of operations by the control device 200 according to the present embodiment.

As illustrated in Fig. 20, the user manually operates the master manipulator of the first control unit 50 (step S10).

The first control unit 50 encodes the movement of the master manipulator, and calculates a position and orientation for after the operation of the master manipulator (step S11).

The first control unit 50 subtracts the known values of the position and orientation from before the operation of the master manipulator from the values of the position and orientation from after the operation of the master manipulator (step S12), and calculates an amount of change in the position and orientation of the master manipulator caused by the manual operation as a result (step S13).

The first control unit 50 multiplies the above-described amount of change in the position and orientation of the master manipulator by a predetermined reduction ratio (step S14), and calculates a control amount for the position and orientation of the end effector 12 (step S15).

The second control unit 60 receives the stated control amount for the position and orientation of the end effector 12 from the first control unit 50, and adds known values of the current position and orientation of the end effector 12 to the control amount (step S16). Target values for the position and orientation of the end effector 12 are calculated as a result (step S17).

The second control unit 60 determines whether the stated target values for the position and orientation of the end effector 12 exceed a predetermined range of movement of the end effector 12 by the work manipulator 10 alone (step S18).

If the result of the determination is YES, the position and orientation of the end effector 12 cannot be brought to the corresponding target values without using both the work manipulator 10 and the arm mechanism 20. In this case, the second control unit 60 calculates control amounts for the plurality of actuators of the arm mechanism 20 necessary for adjusting the position and orientation of the work manipulator 10 after returning the work manipulator 10 to a neutral position (step S19). The arm mechanism 20 is driven and controlled on the basis of the control amounts (step S20).

Additionally, the second control unit 60 recalculates the control amounts for the position and orientation of the end effector 12 from the neutral position of the work manipulator 10 necessary to bring the position and orientation of the end effector 12 to the corresponding target values (step S21). The control by the second control unit 60 then moves to the process illustrated in Fig. 21.

On the other hand, if the result of the determination in step S18 is NO, the position and orientation of the end effector 12 can be brought to the corresponding target values using only the work manipulator 10. In this case, the second control unit 60 utilizes the position and orientation of the end effector 12 calculated in step S15 (step S22). The control by the second control unit 60 then moves to the process illustrated in Fig. 21.

Fig. 21 is a diagram illustrating a process for controlling the work manipulator 10 performed by the second control unit 60. The second control unit 60 extracts (step S32) a control amount component of a twist angle of the distal link 13 (i.e., the roll angle about the central axis C4 of the distal link 13) from the control amounts of the position and orientation of the end effector 12 obtained in step S22 or S23 of Fig. 20 described above (step S31).

The second control unit 60 determines whether the control amount component of the twist (roll) angle extracted in step S32 exceeds a preset twist (roll) angle threshold (step S33). The threshold is set to a small roll angle value to satisfy a condition that a drop in control stability, which that may occur when twisting (rolling) the distal link 13 with the parallel link mechanism 10A, is small enough to not be problematic. For example, the threshold may be set to an angle value of 30 degrees or less, and preferably an angle value of 20 degrees or less. Alternatively, the threshold may be set to 0 degrees. The threshold being 0 degrees means that the operation of twisting (rolling) the distal link 13 is performed exclusively using the rotary actuator 19, not using the parallel link mechanism 10A.

If the determination result in step S33 is YES, the second control unit 60 calculates an angle value obtained by subtracting the stated threshold from the control amount component of the twist (roll) angle described above, and sets that angle value as the control amount of the rotary actuator 19 (step S36).

The second control unit 60 drives and controls the rotary actuator 19 on the basis of the control amount calculated in step S36 (step S37).

In addition, the second control unit 60 sets the angle value corresponding to the stated threshold as a control amount for twisting (rolling) operation of the distal link 13, which is handled by the parallel link mechanism 10A (step S38). The control by the second control unit 60 then moves to step S35.

On the other hand, if the determination result in step S33 is NO, the second control unit 60 sets the stated control amount component of the twist (roll) angle as the control amount for the twisting (rolling) operation of the distal link 13, which is handled by the parallel link mechanism 10A (step S34). The control by the second control unit 60 then moves to step S35.

In step S35, the second control unit 60 replaces the control amount component of the twist angle extracted in step S32, among the control amounts for the position and orientation of the end effector obtained in step S31, with the control amount component of the twist angle calculated in step S34 or S38. Then, using the control amounts for the position and orientation of the end effector, updated by the stated replacement, the second control unit 60 calculates a control amount for each of the six linear actuators 24 of the parallel link mechanism 10A (step S35).

The second control unit 60 drives and controls the six linear actuators 24 of the parallel link mechanism 10A on the basis of the control amounts calculated in step S35 (step S39).

According to the control described above with reference to Fig. 21, in the work manipulator 10 using the parallel link mechanism 10A according to the present embodiment, the twisting (rolling) operation performed by the parallel link mechanism 10A can be appropriately limited to a small angle range. As a result, a worsening in the control capability of the parallel link mechanism 10A, caused by twisting operations, is suppressed, which makes it possible to maintain the stability of the control of the position and orientation of the end effector 12.

In other words, when the end effector 12 is twisted (rolled) significantly using the parallel link mechanism 10A, adjacent intermediate links 15 may cross each other in an X-shaped state as illustrated in Fig. 22, leading to a drop in the overall rigidity of the intermediate links 15. The pressure angle on the distal link 13 from the respective intermediate links 15 also increases. The stability of the control of the orientation of the distal link 13 may worsen as a result. Additionally, for example, if an attempt is made to put the end effector 12 into an orientation aside from the roll angle (e.g., the pitch angle A1) while the end effector 12 is significantly twisted (rolled) using the parallel link mechanism 10A, as illustrated in Fig. 23, there is a risk that the pitch angle A1 at which one of the intermediate links 15 will reach a singular point will decrease, and the range of movement of the end effector 12 will be reduced as a result.

These problems can be reduced through the control illustrated in Fig. 21.

Additionally, if the target value for the control of the position or orientation of the end effector 12 is expected to exceed the range of movement of the work manipulator 10 as a result of the control illustrated in Figs. 20 and 21, the position and orientation of the end effector 12 can be controlled to the respective target values without causing the work manipulator 10 to perform operations for tasks which worsen the stability of the control of the work manipulator 10 by causing the work manipulator 10 and the arm mechanism 20 to operate in tandem.

By adopting a configuration in which the intermediate link is moved parallel to the central axis C1 of the work manipulator 10 using a linear actuator, the work manipulator 10 according to the present embodiment provides the following advantages.
(1) Linear movement of each linear actuator (e.g., a linear motor) can be applied directly to each linkage 10B. There is thus no need to provide a gear mechanism between the motor and the linkage, for example. The motor can move the link directly without being affected by backlash from a gear mechanism, which makes it possible to control the position and orientation with a high level of accuracy.
(2) A strong force from the linear actuator can be applied to the linkage regardless of the displacement of the movable part of the linear actuator, which enables accurate control resistant to the force of gravity, inertia, and the like.
(3) The movable part of the linear actuator moves in a straight line parallel to the central axis C1, which makes it possible to design the manipulator base 11, on which the six linear actuators are arranged in a circle about the central axis C1, so as to have a small diameter.

Furthermore, of the six intermediate links, two adjacent intermediate links are arranged in a non-parallel manner so as to spread out with proximity to the tip and narrow with proximity to the tip of the next-adjacent two intermediate link. This makes it possible to slightly reduce the diameter of the distal link 13 relative to the diameter of the manipulator base 11. For example, the diameter of the distal link 13 relative to the diameter of the manipulator base 11 may be in a range of from 1/2 to 3/4, and may be 2/3, for example.

Setting the diameter of the distal link 13 to this range makes it easy to perform movements similar to those of a human hand, which enables highly-accurate control such as that used in surgery. If the diameter of the distal link 13 is smaller than this range, depending on the stroke of the linear actuator, the distal link 13 may move with a high level of sensitivity, which can make highly-accurate control difficult.

In addition, according to the arrangement of the six distal junctions 14 of the distal link 13 illustrated in Fig. 9 and the arrangement of the six proximal links 17 illustrated in Fig. 10, the six intermediate links 15 are not always parallel to each other, and thus the position and orientation of the end effector 12 can be kept stable.

Note that the foregoing embodiment has described a configuration in detail to clearly describe the present invention, and is not necessarily limited to an embodiment having all of the configurations described. It is also possible to add, remove, or replace part of the configuration of each example with other configurations.

In the foregoing embodiment, the first control unit 50 includes a master manipulator manually operated by the user, and generates control commands in accordance with the manual operations. However, the first control unit 50 may be configured to automatically generate control commands in accordance with a program prepared in advance.

In addition, the system 1 according to the foregoing embodiment can control the position and orientation of the end effector 12 with six degrees of freedom using the parallel link mechanism 10A having the six linkages 10B. In other words, the system 1 has a degree of shape freedom nearly equivalent to that of a human hand and arm.

The system 1 according to the foregoing embodiment is not limited to surgical operations, and can be applied in various applications such as assembly, disassembly, processing, and maintenance of products, the care of people, and the like. The configuration or functions of the system can be changed according to each application without departing from the essential spirit of the invention. Applications in which the system 1 can be applied are as follows, for example.
1) Applications in which a load on the tip of the end effector 12 is small and high tracking accuracy is required, such as a surgical support robot (a master-slave type robot).
2) A three-dimensional microchip assembly robot. Three-dimensional micro-manipulation for research, such as attaching living cells one by one in three dimensions to three-dimensional collagen structures. Applications for repeatedly moving heavy objects at high speeds and in a short period of time to a fixed position, such as high-speed picking.
3) A coating machine capable of handling free-form surfaces. Applications requiring constant pressure without being affected by variations, such as bonding prepreg to molds. In these applications, if the shape of the target object is set, the motion curve (operation method) of the linear actuator can be set in advance, and the linear actuator can be operated according to the motion curve. When following irregular variations, the distance to a location where pressurization is scheduled to occur after a set time can be measured using a laser distance sensor, for example, and on the basis of this measurement data, the motion curve for the linear actuator can be generated in real time and the linear actuator can be operated. Alternatively, a six-axis inner force sensor, for example, may be attached to the end effector. The direction of the curved surface of the target object contacted by the end effector may be determined using the direction of reaction force sensed by the sensor, and the end effector may then be moved in real time to apply a constant pressure perpendicular to the curved surface.
4) A drilling robot for curved surfaces. A grinder gripping robot for deburring. In these applications, it is necessary to push the end effector with a large amount of force and control the end effector with a high degree of precision. To handle this, a parallel link mechanism having an integrated arrangement for the distal link 130, as illustrated in Figs. 16 and 17, can be used. Additionally, a hydraulic actuator to which servo valve control is applied can also be used as the linear actuator 24, for example.

In the foregoing embodiment, a linear actuator 24 is used to move each linkage 10B of the parallel link mechanism 10A. However, an actuator having two or more degrees of freedom of operation may be used instead.

In the foregoing embodiment, the work manipulator 10 is automatically returned to the neutral position in response to a control command from the first control unit 50. However, the work manipulator 10 may be returned to the neutral position by an instruction from the user at a time desired by the user (e.g., the user operating a foot switch). In this case, the arm mechanism 20 may be operated automatically so as to correctly control the position and orientation of the end effector 12 even if the work manipulator 10 returns to an initial position.

With respect to the control device of the system 1 including the work manipulator 10 according to the present embodiment, another example of operations performed by the control device 200 will be described here. Figs. 20 and 25 are flowcharts illustrating another example of operations performed by the control device 200. The steps in Fig. 20 are the same as in the foregoing example and will therefore not be described.

Fig. 25 is a diagram illustrating a process for controlling the work manipulator 10 performed by the second control unit 60. The second control unit 60 extracts (step S132) a control amount component of a twist angle of the distal link 13 (i.e., the roll angle about the central axis C4 of the distal link 13) from the control amounts of the position and orientation of the end effector 12 obtained in step S22 or S23 of Fig. 20 described above (step S131).

For the twist (roll) angle control amount component extracted in step S132, the second control unit 60 determines a predetermined distribution ratio between the twist (roll) angle control amount handled by the parallel link mechanism 10A and the twist (roll) angle control amount handled by the rotary actuator 19 (step S133). For example, X/180 degrees may be employed as the distribution ratio pertaining to the twist (roll) control amount handled by the parallel link mechanism 10A, and (180 - X)/180 degrees may be employed as the distribution ratio pertaining to the twist (roll) control amount handled by the rotary actuator 19. Here, the numerator "X" is selected from a range within the maximum twist (roll) angle (e.g., 30 degrees, or to be safer, 20 degrees) that can be handled by the parallel link mechanism 10A, and may be 20 degrees, for example. The denominator "180 degrees" corresponds to what is almost the maximum angle at which a surgeon can twist forceps by hand during surgery, for example, which is a typical application of the work manipulator. In another application of the work manipulator, a twisting (rolling) operation of 180 degrees or more may be performed, in which case the denominator may be a value of 180 degrees or more.

The second control unit 60 calculates a twist control amount of the parallel link mechanism 10A by applying (e.g., multiplying) the distribution ratio of the parallel link mechanism 10A (e.g., 20 degrees/180 degrees) determined in step S133 to the control amount component of the twist (roll) angle extracted in step S132 described above (step S135).

The second control unit 60 calculates a twist control amount of the rotary actuator 19 by applying (e.g., multiplying) the distribution ratio of the rotary actuator 19 (e.g., (180 - X) degrees/180 degrees) determined in step S133 to the control amount component of the twist (roll) angle extracted in step S132 described above (step S136).

The second control unit 60 drives and controls the six linear actuators 24 of the parallel link mechanism 10A on the basis of the control amount calculated in step S135 (step S139), and simultaneously drives and controls the rotary actuator 19 on the basis of the control amount calculated in step S136 (step S137).

According to the control described above with reference to Fig. 25, in the work manipulator 10 using the parallel link mechanism 10A according to the present embodiment, the twisting (rolling) operation performed by the parallel link mechanism 10A can be appropriately limited to a small angle range. As a result, a worsening in the control capability of the parallel link mechanism 10A, caused by twisting operations, is suppressed, which makes it possible to maintain the stability of the control of the position and orientation of the end effector 12.

As described earlier with reference to Fig 22, when the end effector 12 is twisted (rolled) significantly using the parallel link mechanism 10A, adjacent intermediate links 15 may cross each other, leading to a problem in that the overall rigidity of the intermediate links 15 will drop. The range of motion over which the parallel link mechanism 10A can twist stably and smoothly is approximately 30 degrees, and to be safer, is within 20 degrees. On the other hand, the twisting range of a surgeon's hand during surgery is approximately 180 degrees. In this example, the distribution ratio for the parallel link mechanism 10A and the rotary actuator 19 is X/180 and (180 - X)/180 (X is, for example, 20). As a result, the parallel link mechanism 10A always twists within a range of X degrees (e.g., 20 degrees), and the rotary actuator 19 handles the remaining twisting movement.

As compared to the control process illustrated in Fig. 21, the control process illustrated in Fig. 25 has an advantage that the parallel link mechanism 10A reaches the limit of the twisting range of motion (e.g., 30 degrees or 20 degrees) less frequently.

In addition, the rotary actuator 19 may be driven by hydraulic pressure or the like, for example, initial motion may be delayed. However, the parallel link mechanism 10A is driven by a rigid component, and there is thus an extremely small amount of initial motion delay. For example, in surgical settings, delay in the initial movement of the rotary actuator 19 relative to a command from the first control unit 50 (see Fig. 4) (e.g., an operation made by the surgeon) may have an undesirable effect on the execution of the surgical procedure. According to the control process illustrated in Fig. 25, the rotary actuator 19 and the parallel link mechanism 10A are controlled to be driven simultaneously regardless of the degree of the twisting control amount. Accordingly, the parallel link mechanism 10A operates substantially without delay even when the initial motion of the rotary actuator 19 is delayed, and thus influence of delay in the initial motion of the end effector 12 can be reduced to a degree which is, practically speaking, not problematic.

Fig. 26 illustrates a member that sends power or signals to a device on the distal link of the system according to the embodiment.

As illustrated in Fig. 26, the member 300 is disposed in a space between the manipulator base 11 and the distal link 13, surrounded by the six linkages 10B of the parallel link mechanism 10A. The member 300 transmits power (such as mechanical power or electrical power) to and/or from one or more devices mounted on the distal link 13 (e.g., the end effector 12 and/or the rotary actuator 19) for driving or controlling those devices, signals to control those devices, or signals to communicate with those devices. For example, if the end effector 12 or the rotary actuator 19 is a type driven by hydraulic pressure, the member 300 can include a pipe that carries a hydraulic fluid having the required hydraulic pressure. Alternatively, if the end effector 12 or the rotary actuator 19 is a motorized type, the member 300 can include an electric wire that supplies the required power and control signals. When one or more types of sensors are mounted on the distal link 13, the member 300 can include electrical wires that carry power or signals that drive or control those sensors, or signals that are output from those sensors. The member 300 is made of a material that is at least partially flexible so as not to interfere with the movement of the distal link 13.

The member 300 that transmits power or signals to or from the device on the distal link 13 is disposed in a space on the inner side of the parallel link mechanism 10A, such that the size of the work manipulator 10 can be suppressed to not be too large.

### [Reference Signs List]

- 1: System
- 10, 101: Work manipulator
- 10A: Parallel link mechanism
- 10B: Linkage
- 11: Manipulator base
- 12: End effector
- 13: Distal link
- 14: Distal junction
- 15: Intermediate link
- 16: Proximal junction
- 17: Proximal link (movable part)
- 18: Stator
- 19: Rotary actuator
- 20: Arm mechanism
- 21: Arm
- 22: Arm junction
- 23: Wrist
- 24: Linear actuator
- 30: Robot base
- 50: First control unit
- 60: Second control unit
- 61a: First computing unit
- 61c: Second computing unit
- 62: Arm mechanism control unit
- 63, 64: Servo controller
- 65: Rotary actuator control unit
- 66: Parallel link actuator control unit
- 70: Imaginary plane
- 300: Member
- C1: Central axis of work manipulator
- C2: Central axis of end effector
- C3: Central axis of distal link
- H1 to H6: First to sixth distal junctions
- L1 to L6: First to sixth proximal links
- M1 to M6: First to sixth intermediate links

## Claims

1. A work manipulator executing work on a work target, the work manipulator comprising:
a parallel link mechanism including six linkages arranged in parallel, each of the six linkages having one proximal link and one intermediate link;
a manipulator base configured to support a proximal end of the proximal link of each of the six linkages;
a distal link including six distal junctions and connected to a distal end of the intermediate link of each of the six linkages at corresponding ones of the six distal junctions;
an end effector supported by the distal link; and
six proximal actuators each configured to move the proximal link of a corresponding one of the six linkages relative to the manipulator base to move the distal link, thereby moving the end effector by moving the distal link,
wherein the six distal junctions of the distal link are arranged about a first axis of the distal link, and
when the six distal junctions are taken as first, second, third, fourth, fifth, and sixth distal junctions in order along a periphery of the first axis, and when viewed along the first axis, an angle between the first and second distal junctions is taken as a first angle, an angle between the second and third distal junctions is taken as a second angle, an angle between the third and fourth distal junctions is taken as a third angle, an angle between the fourth and fifth distal junctions is taken as a fourth angle, an angle between the fifth and sixth distal junctions is taken as a fifth angle, and an angle between the sixth and first distal junctions is taken as a sixth angle, the first, third, and fifth angles are an angle α, the second, fourth, and sixth angles are an angle β, and the angle α is larger than the angle β.

2. The work manipulator according to claim 1,
wherein the angle α is set to a range of from 80 degrees to 115 degrees, and the angle β is set to a range of from 40 degrees to 5 degrees.

3. The work manipulator according to claim 1,
wherein the angle α is set to a range of from 85 degrees to 110 degrees, and the angle β is set to a range of from 35 degrees to 10 degrees.

4. The work manipulator according to claim 1,
wherein the angle α is set to a range of from 85 degrees to 105 degrees, and the angle β is set to a range of from 35 degrees to 10 degrees.

5. The work manipulator according to claim 1,
wherein the angle α is set to a range of from 85 degrees to 95 degrees, and the angle β is set to a range of from 35 degrees to 25 degrees.

6. The work manipulator according to any one of claims 1 to 5,
wherein when the intermediate links connected to the first, second, third, fourth, fifth, and sixth distal junctions are taken as first, second, third, fourth, fifth, and sixth intermediate links,
the first and second intermediate links are disposed non-parallel to each other, the third and fourth intermediate links are disposed non-parallel to each other, and the fifth and sixth intermediate links are disposed non-parallel to each other.

7. The work manipulator according to any one of claims 1 to 5,
wherein the six linkages are disposed about a second axis in the parallel link mechanism,
when the six linkages are taken as a first, second, third, fourth, fifth, and sixth linkage in order along a periphery of the second axis, a first proximal link of the first linkage is connected to the first distal junction, a second proximal link of the second linkage is connected to the second distal junction, a third proximal link of the third linkage is connected to the third distal junction, a fourth proximal link of the fourth linkage is connected to the fourth distal junction, a fifth proximal link of the fifth linkage is connected to the fifth distal junction, and a sixth proximal link of the sixth linkage is connected to the sixth distal junction, and
when viewed along the second axis, when an angle between the first and second proximal links is taken as a seventh angle, an angle between the second and third proximal links is taken as an eighth angle, an angle between the third and fourth proximal links is taken as a ninth angle, an angle between the fourth and fifth proximal links is taken as a tenth angle, an angle between the fifth and sixth proximal links is taken as an eleventh angle, and an angle between the sixth and first proximal links is taken as a twelfth angle, the seventh, ninth, and eleventh angles are an angle γ, the eighth, tenth, and twelfth angles are an angle δ, and the angle γ is smaller than the angle δ.

8. The work manipulator according to any one of claims 1 to 5, further comprising:
a rotary actuator configured to rotate the end effector about a third axis of the end effector between the distal link and the end effector.

9. The work manipulator according to any one of claims 1 to 5,
wherein the six proximal actuators are six linear actuators supported by the manipulator base, and
the six linear actuators are configured to move the proximal link of corresponding ones of the six linkages linearly to move the distal link, thereby moving the end effector.

10. A system controlling a position and an orientation of an end effector, the system comprising:
a work manipulator configured to move the end effector; and
a control device configured to control the work manipulator,
wherein the work manipulator includes a parallel link mechanism and a rotary actuator,
the parallel link mechanism has:
a distal link configured to support the end effector;
a plurality of linkages disposed in parallel, and configured to move the distal link; and
a linkage actuator configured to move the plurality of linkages,
the rotary actuator is provided between the distal link and the end effector, and is configured to control a roll angle of the end effector, and
the control device is configured to:
receive a first control command pertaining to the position and the orientation of the end effector;
extract, from the first control command, a first control component pertaining to the roll angle of the end effector;
when the first control component does not exceed a pre-set threshold, control only the linkage actuator, among the linkage actuator and the rotary actuator, according to the first control command;
when the first control component exceeds the threshold, calculate a second control component pertaining to the roll angle by subtracting the threshold from the first control component, and calculate a second control command by subtracting the second control component from the first control command;
control the rotary actuator in accordance with the second control component pertaining to the roll angle; and
control the linkage actuator in accordance with the second control command.

11. The system according to claim 10, further comprising:
an arm mechanism configured to move the work manipulator,
wherein the control device is configured to:
determine whether the first control command exceeds a range of movement of the work manipulator;
when the first control command does not exceed the range of movement, control only the work manipulator, among the work manipulator and the arm mechanism, according to the first control command; and
when the first control command exceeds the range of movement, control both the work manipulator and the arm mechanism according to the first control command.

12. A system controlling a position and an orientation of an end effector, the system comprising:
a work manipulator configured to move the end effector; and
a control device configured to control the work manipulator,
wherein the work manipulator includes a parallel link mechanism and a rotary actuator,
the parallel link mechanism has:
a distal link configured to support the end effector;
a plurality of linkages disposed in parallel, and configured to move the distal link; and
a linkage actuator configured to move the plurality of linkages,
the rotary actuator is provided between the distal link and the end effector, and is configured to control a roll angle of the end effector, and
the control device is configured to:
receive a first control command pertaining to the position and the orientation of the end effector;
when a control component pertaining to the roll angle of the end effector is not included in the first control command, control only the linkage actuator, among the linkage actuator and the rotary actuator, according to the first control command;
when the control component pertaining to the roll angle is included in the first control command, calculate a second control command by subtracting the control component pertaining to the roll angle from the first control command;
control the rotary actuator in accordance with the control component pertaining to the roll angle; and
control the linkage actuator in accordance with the second control command.

13. A system controlling a position and an orientation of an end effector, the system comprising:
a work manipulator configured to move the end effector; and
a control device configured to control the work manipulator,
wherein the work manipulator includes a parallel link mechanism and a rotary actuator,
the parallel link mechanism has:
a distal link configured to support the end effector;
a plurality of linkages disposed in parallel, and configured to move the distal link; and
a linkage actuator configured to move the plurality of linkages,
the rotary actuator is provided between the distal link and the end effector, and is configured to control a roll angle of the end effector, and
the control device is configured to:
receive a first control command pertaining to the position and the orientation of the end effector;
extract, from the first control command, a first control component pertaining to the roll angle of the end effector;
calculate a third control command to the linkage actuator and a fourth control command to the rotary actuator, respectively, by applying a first distribution ratio for the linkage actuator and a second distribution ratio for the rotary actuator so as to divide the first control component;
control the linkage actuator in accordance with the third control command; and
control the rotary actuator in accordance with the fourth control command.

14. The system according to claim 13,
wherein the first distribution ratio is X/180, and the second distribution ratio is (180 - X)/180.

15. The system according to claim 14,
wherein the X is a range of values of the roll angle over which the linkage actuator is capable of stable operation.
